# EUROPEAN PATENT SPECIFICATION

(11) **EP 4 256 727 B1**
(45) Date of publication and mention of the grant of the patent: **29.01.2025**
(21) Application number: 21759310.2
(22) Date of filing: 16.08.2021
(51) Int. Cl.: H04B 10/2575, H04B 10/272, H04B 10/61, H04B 10/69, H04J 14/02

(54) **APPARATUS AND METHOD OF CARRIER SUPPRESSION IN FREQUENCY REFERENCED PASSIVE OPTICAL NETWORK**
VORRICHTUNG UND VERFAHREN ZUR TRÄGERUNTERDRÜCKUNG IN EINEM FREQUENZREFERENZIERTEN PASSIVEN OPTISCHEN NETZWERK
DISPOSITIF ET PROCÉDÉ DE SUPPRESSION DE PORTEUSE DANS UN RÉSEAU OPTIQUE PASSIF RÉFÉRENCÉ EN FRÉQUENCE

(43) Date of publication of application: 11.10.2023
(73) Proprietor: Huawei Technologies Co., Ltd., Shenzhen, Guangdong 518129 (CN)
(72) Inventor: HANTSCHMANN, Constanze, 80992 Munich (DE); CALABRO, Stefano, 80992 Munich (DE); CANO VALADEZ, Ivan, Nicolas, 80992 Munich (DE); TALLI, Giuseppe, 80992 Munich (DE); WEI, Jinlong, 80992 Munich (DE)
(74) Representative: MERH-IP Matias Erny Reichl Hoffmann Patentanwälte PartG mbB
(86) International application number: PCT/EP2021/072702
(87) International publication number: WO 2023/020676

(56) References cited:
- EP-A1- 2 573 961
- WO-A2-02/061981
- MARKUS ROPPELT ET AL: "Tuning methods for uncooled low-cost tunable lasers in WDM-PON", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1 - 3, XP031946173, ISBN: 978-1-4577-0213-6

## Description

### TECHNICAL FIELD

The present disclosure relates generally to the field of optical communication and more specifically, to an apparatus and a method of carrier suppression in frequency referenced passive optical network and other optical networks with a point to multi-point architecture.

### BACKGROUND

In optical communication, optical access network based on a passive optical network (PON) technology typically has a point to multi-point (P2MP) architecture, where modulated light is transmitted over a shared optical fiber infrastructure. The conventional passive optical network may include optical power splitters in a field-deployed optical distribution network (ODU) without any active power supplies. Moreover, in the optical access networks, data is generally broadcasted to all users via a downstream transmission (or link) of the conventional passive optical network. Further, in an upstream link, such passive optical networks apply time-division multiplexing (TDM) for data multiplexing, where each user sends its data at the assigned time slots, such as to avoid data collision with other users in the shared fiber infrastructure. However, the conventional time-division multiplexing-based upstream link requires a burst optical transmitter at optical network units (ONUs) and also requires burst mode receivers at optical line terminals (OLT) (or central offices (OC)). However, such optical transmitter and burst mode receivers are expensive and technically challenging in terms of data multiplexing, especially for passive optical networks with a high data rate (e.g., 50 gigabits (Gb)/s and beyond). Moreover, an inherent latency (e.g., depending on the split ratio) and jitter associated with the time-division multiplexing limits industrial applications because each optical network unit needs a high bandwidth component even if they can achieve a much lower average bit rate. Therefore, it is difficult to expand or scale services of the time-division multiplexing-based passive optical network so as to support emerging applications (e.g., fifth-generation (5G), autonomous driving, augmented reality (AR), a tactile internet, and the like).

Currently, certain attempts have been made to improve the architecture of the time-division multiplexing-based passive optical networks, for example, by using frequency division multiplexing (FDM) and code division multiplexing (CDM). In one of the recent attemps, a frequency lock loop (FLL) unit at each optical network unit is used for the uplink transmission in a frequency division multiplexing-based passive optical network. In this case, the frequency lock loop unit in the end node enables to lock its laser frequency so as to adaptively track assigned reference frequencies sent from the central node. Further, a control loop keeps tracking the reference frequencies and forces the end node laser frequency to keep a required relative frequency difference to the reference frequencies (e.g., based on a frequency comb laser and a single frequency laser). Thus, in the frequency division multiplexing-based passive optical network, a large number of users can transmit their optical signals simultaneously. However, such transmission leads to a problem at the upstream link (e.g., receiver), which detects upstream signals of all the users (or at least a group of users) simultaneously utilizing coherent detection systems. Further, in the frequency division multiplexing-based passive optical networks architecture that uses intensity modulation (IM) for the upstream link, each optical network unit signal inherently contains a large residual optical carrier frequency at its respective transmission frequency. Such residual optical carrier frequency is necessary for direct detection (DD) systems and not required in coherent detection systems, where the transmitted information is obtained from modulation sidebands of the optical signal in the frequency domain only. However, a large power that is aggregated by a multitude of the residual optical carrier frequency received in any frequency division multiplexing-based passive optical network using a single coherent detection has a risk of overloading the optical line terminal receiver components, such as by an analog-to-digital converter (ADC). This is because a useful user signal in the frequency division multiplexing passive optical network is like a noise of the residual carrier signal. Therefore, such carrier signal covers a considerably large amplitude range of overall user signals as compared to the useful user signal, and as a consequence, effective quantization bits used for the user data is reduced. As a result, large quantization noise is introduced to the user signal. Further, the more the residual optical carrier frequency coexist, the larger is the quantization noise, which degrades overall performance. Therefore, it is necessary to remove or at least suppress the residual optical carrier frequency in the frequency division multiplexing passive optical network.

Conventionally, the residual optical carrier frequency of a single optical network unit can be filtered out by using a narrow optical band-stop filter, which blocks the transmission of the residual optical carrier frequency. Such filters (or external filters) include generating a single-sideband optical signal for the residual optical carrier frequency suppression. However, in frequency division multiplexing-based passive optical network, such filtering requires either a large number of tuned optical filters (TOFs) or fixed filters and narrow optical filters for each transmission wavelength together with a defined wavelength control over the respective transmitted signals. As a consequence, suppression of the residual optical carrier frequency becomes very complex and expensive and thus not feasible for passive optical networks in which operation cost is critical. In another conventional approach, a mach-zehnder interferometer modulator may be used to modulate the optical signal of an external laser source in a way that the (unused) residual optical carrier frequency exits at one port, whereas modulated sidebands only exit at another port. However, this is too costly for upstream carrier suppression in an intensity modulation-coherent frequency division multiplexing-based passive optical network, as such approach requires an expensive mach-zehnder-based solution with an external light source at each optical network unit. In a yet another approach, a periodic filter (e.g., a spectrum correction optical filter) may be aligned with a wavelength division multiplexing (WDM) upstream signals, such as center wavelengths of the periodic filters loss peaks, at which the transmittance becomes minimal, and may coincide with the center wavelength of each optical signal in a wavelength division multiplexing system. However, in such an approach, an accurate alignment of the periodic filter and each separate wavelength division multiplexing light source is required to enable efficient carrier suppression. Therefore, a feedback control loop is required to align the periodic filter to minimize the detected power at the receiver. Alternatively, the feedback information may be used from a measured bit-error rate from a transmitted differential phase-shift keying (DPSK) optical signal for the periodic filter alignment. However, such approaches are based on the assumption that each of the wavelength division multiplexing upstream and downstream transmitters is perfectly aligned to the international telecommunication union telecommunication standardization sector (ITU-T) grid (or any other nominal value). Moreover, such an assumption is generally not valid under realistic operation conditions, where the individual transmitters are usually allowed to deviate (e.g., by a few gigahertz (GHz)) from their assigned operation frequency.

In certain scenarios, the periodic filter (or periodic optical filter) is positioned in an optical transmission path for generating a plurality of dispersion tolerant single-sideband optical signals simultaneously for a plurality of optical transmitters by suppressing the other sideband of an original double-sideband signal. In such scenarios, a spectral alignment between the periodic filter and the plurality of transmitters is here achieved based on a feedback loop. For which each transmitter is modulated with a unique low-frequency (e.g., kilohertz (kHz) or megahertz (MHz)) pilot tone, whose signal strength after the periodic filter is maximized by adjusting the center frequency of the respective transmitter. Moreover, in such scenarios, the periodic filter is fixed and aligned to the ITU-T grid or shifted by a half channel spacing. However, this is based on the assumption that the periodic filter is independent of temperature or other environmental changes. However, in such scenarios, an additional filter alignment or stabilization scheme is required to guarantee that the periodic filter properties do not deviate or drift away substantially from its originally targeted characteristics. Therefore, there is no universal solution available for a central, robust wavelength alignment scheme between the optical filter and the multitude of transmitters. Moreover, there exists a technical problem of high cost and complexity associated with carrier suppression in frequency division multiplexing passive optical network systems.

WO02/061981A2 generally discloses a bidirectional optical communications system comprising two transceivers, each transceiver having an optical data input and an optical data output, wherein the optical data output of each transceiver is coupled to the optical data input of the other transceiver and each transceiver comprises at least one transmitter-receiver pair. Each transmitter-receiver pair comprises a laser source for generating a laser beam, an optical splitter coupled to the laser source for splitting the laser beam into a source beam and a local oscillator beam, an optical transmitter coupled to receive the source beam from the optical splitter for modulating the source beam with a received electrical data signal to generate an optical data signal, and a heterodyne receiver coupled to receive the local oscillator beam from the optical splitter for recovering an electrical data signal from an optical data signal using the local oscillator beam as an optical local oscillator in a heterodyne detection process.

EP2573961A1 generally discloses an optical frequency locking method for tuning each of a plurality of narrow-band optical channel transmit signals to a dedicated optical channel frequency. The channel transmit signals have arbitrary channel frequency spacings. The method comprises, for each channel transmit signal, the steps of (a) tapping-off a portion of the optical power of the channel transmit signal to be tuned and filtering the tapped-off channel transmit signal using at least one optical filter device having a periodic transfer function, the periodicity of the transfer function being unequal to the fixed channel frequency spacing, (b) monitoring, as an optical input signal, the optical power of the channel transmit signal supplied to the at least one optical filter device and, as an optical output signal, the optical power of the filtered channel transmit signal, and (c) tuning, within a predetermined locking range for the dedicated optical channel frequency, the optical frequency of the respective channel transmit signal such that a predetermined value for the ratio of the output signal and the input signal or, between multiple output signals, corresponding to the dedicated optical channel frequency (lock-in point) is reached.

MARKUS ROPPELT ET AL, "Tuning methods for uncooled low-cost tunable lasers in WDM-PON", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, (20110306) generally discloses a method of tuning uncooled low-cost lasers without an integrated wave locker via a shared, centralized wave locker in a WDM-PON context.

Therefore, in light of the foregoing discussion, there exists a need to overcome the aforementioned drawbacks associated with the conventional approaches of carrier suppression in frequency division multiplexing-based passive optical network systems.

### SUMMARY

The present invention is defined by the independent claims. In the following, parts of the description and drawings referring to former embodiments which do not necessarily comprise all features to implement embodiments of the claimed invention are not represented as embodiments of the invention but as examples useful for understanding the embodiments of the invention.

The present disclosure provides a method and apparatus of carrier suppression in frequency referenced passive optical network. The present disclosure provides a solution to the existing problem of high cost and complexity associated with carrier suppression in frequency division multiplexing-based passive optical network systems. An objective of the present disclosure is to provide a solution that overcomes at least partially the problems encountered in the prior art and provides an improved method and apparatus of carrier suppression in frequency referenced passive optical network, which is cost-efficient and has reduced complexity.

One or more objectives of the present disclosure is achieved by the solutions provided in the enclosed independent claims. Advantageous implementations of the present disclosure are further defined in the dependent claims.

In one aspect, the present disclosure provides an apparatus for carrier suppression in a frequency referenced passive optical network, PON, with point to multi-point, P2MP, topology comprising a central node and end nodes, where each end node is configured to generate an intensity-modulated optical uplink signal frequency and to lock a central frequency of the intensity-modulated optical uplink signal to one of reference tones of a downlink frequency comb signal broadcasted by a central node transmitter, and the central node comprises a single coherent receiver for detecting a combined uplink signal, the combined uplink signal comprising the intensity-modulated optical signals from the end nodes, the apparatus being arranged in the central node and comprising a periodic optical filter unit configured for suppressing residual optical carriers in the combined uplink signal by filtering a portion of the downlink frequency comb signal and the combined uplink signal, and a control unit configured for monitoring a power of the filtered portion of the downlink frequency comb signal and spectrally aligning the periodic optical filter unit with the frequency comb signal based on the power of the filtered portion of the downlink frequency comb signal.

The apparatus of the present disclosure improves suppression of the residual optical carriers with the periodic optical filter unit. Moreover, the control unit of the apparatus improves the alignment of the downlink frequency comb signal spectrally with the periodic optical filter unit. In addition, the reference tones of the downlink frequency comb signal are tuned in the apparatus, which is similar to tunning of the residual optical carriers. Thus, the downlink frequency comb signal coordinates reference tone (or frequency), residual optical carrier, and the periodic optical filter unit. Beneficially, the combined uplink signal of each end node has a dedicated gap between residual optical carriers and a sideband of the combined uplink signal to tolerate the frequency offset between residual optical carrier and its reference tone. Thus, a filter profile of the periodic optical filter unit does not get affected with the frequency offset.

In an implementation form, the periodic optical filter unit has a free spectral range close to a channel spacing of the frequency referenced passive optical network, PON.

In this implementation, the periodic optical filter unit of the central node suppresses all residual optical carriers simultaneously without any complexity.

In a further implementation form, the periodic optical filter unit comprises a first optical filter and a second optical filter, identical to the first optical filter, with the portion of the downlink frequency comb signal passing through the first optical filter and the combined uplink signal passing through the second optical filter.

As the periodic optical filter unit comprises the first optical filter and the second optical filter, thus the spectral alignment of the downlink frequency comb signal to the periodic optical filter unit would not affect the uplink communication that already exists, as the alignment control and filter process of the combined uplink signal are separated in different filters , such as the first optical filter and the second optical filter of the periodic optical filter unit.

In a further implementation form, each of the first optical filter and the second optical filter comprises one of a microring resonator, a Fabry-Perot etalon, a multi-cavity etalon, and a Mach-Zehnder interferometer.

By virtue of the apparatus of the present disclosure, the residual optical carrier problems are overcome with improved performance.

In a further implementation form, the periodic optical filter unit comprises an optical filter with multiple optical ports wherein the portion of the downlink frequency comb signal passes in one direction or path of the optical filter and the combined uplink signal passes in another direction or path of the optical filter.

The optical filter of this implementation minimizes the output power of a control (or the control units) direction or path. Beneficially, in the case of the optical filter, the output power of the downlink frequency comb signal further tunes either the optical filter or the downlink frequency comb signal.

In a further implementation form, the optical filter comprises one of a microring resonator, a Fabry-Perot etalon, a multi-cavity etalon, and a Mach-Zehnder interferometer.

In this implementation, the apparatus of the present disclosure solves the residual optical carrier problems with improved performance.

In a further implementation form, the control unit comprises a photodiode, PD, which is configured for spectrally aligning the periodic optical filter unit with the downlink frequency comb signal to minimize the power of the filtered portion of the downlink frequency comb signal.

Beneficially, the control unit is easy to apply, as the photodiode of the control unit relies on the alignment of the downlink frequency comb signal.

In a further implementation form, the control unit comprises a thermo-electronic controller, TEC, a phase modulator, an electro-optic modulator, a Mach-Zehnder interferometer, an intra-cavity etalon.

In this implementation, the control unit minimizes/maximizes the residual optical carriers at the output of the periodic optical filter unit.

In a further implementation form, the control unit is configured for spectrally aligning the periodic optical filter unit with the frequency comb signal by means of tuning a central frequency of the downlink frequency comb signal.

Beneficially, a suitable alignment between the periodic optical filter unit with the downlink frequency comb signal leads to a minimum detected output power of the control unit.

In a further implementation form, the control unit is configured for spectrally aligning the periodic optical filter unit with the frequency comb signal by means of tuning a spacing of the downlink frequency comb signal.

By virtue of tuning a spacing of the downlink frequency comb signal, deviation in the downlink frequency comb signal is minimized.

In a further implementation form, the control unit is configured for spectrally aligning the periodic optical filter unit with the frequency comb signal by means of tuning a central frequency of the periodic optical filter unit.

In this implementation, tuning a central frequency of the periodic optical filter unit minimizes the output power of the periodic optical filter unit (or the first optical filter).

In another aspect, the present disclosure provides a method of carrier suppression in a frequency referenced passive optical network, PON, with point to multi-point, P2MP, topology comprising a central node and end nodes, where each end node is configured to generate an intensity-modulated optical uplink signal and lock a central frequency of the intensity-modulated optical uplink signal to one of reference tones of a downlink frequency comb signal broadcasted by a central node transmitter, and the central node comprises a single coherent receiver for detecting a combined uplink signal, the combined uplink signal comprising the intensity-modulated optical uplink signals from the end nodes, the method comprising separating a portion of the downlink frequency comb signal, suppressing residual optical carriers in the combined uplink signal by periodic optical filtering the portion of the downlink frequency comb signal and the combined uplink signal, monitoring a power of the filtered portion of the downlink frequency comb signal, and spectrally aligning the periodic optical filtering with the frequency comb signal based on the power of the filtered portion of the downlink frequency comb signal.

The method achieves all the advantages and effects of the apparatus of the present disclosure.

It is to be appreciated that all the aforementioned implementation forms can be combined. It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a block diagram of an apparatus for carrier suppression in a frequency referenced passive optical network with point to multi-point topology, in accordance with an embodiment of the present disclosure;
FIG. 1B is a block diagram that illustrates various exemplary components of a central node, in accordance with an embodiment of the present disclosure;
FIG. 1C is a block diagram that illustrates various exemplary components of an end node, in accordance with an embodiment of the present disclosure;
FIG. 2 is a flowchart of a method of carrier suppression in a frequency referenced passive optical network (PON) with point to multi-point (P2MP) topology, in accordance with an embodiment of the present disclosure;
FIG. 3A is a block diagram of an apparatus for carrier suppression in a frequency referenced passive optical network with point to multi-point topology, in accordance with another embodiment of the present disclosure;
FIG. 3B is a block diagram of an apparatus for carrier suppression in a frequency referenced passive optical network with point to multi-point topology, in accordance with yet another embodiment of the present disclosure;
FIG. 4A is a flowchart of a control algorithm to stabilize a thermo-electronic controller, in accordance with an embodiment of the present disclosure;
FIG. 4B is a graphical representation that illustrates a relationship between a center frequency tunning of a downlink frequency comb signal and a normalized output power of a periodic optical filter unit, in accordance with an embodiment of the present disclosure;
FIG. 5A is an illustration that depicts multi-stage micro ring filters, in accordance with an embodiment of the present disclosure; and
FIG. 5B is an illustration that depicts a Fabry-Perot etalon, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

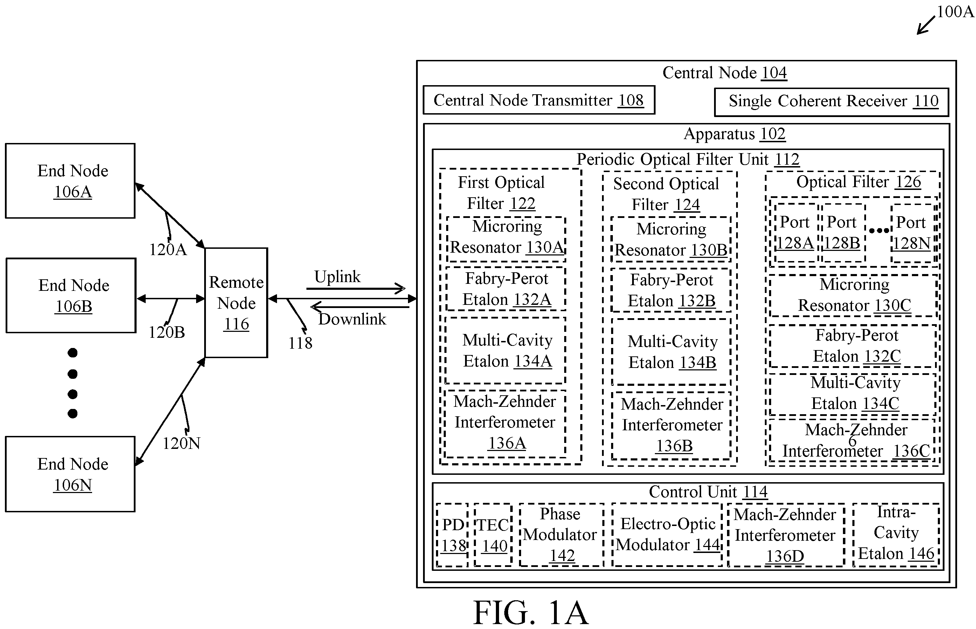

FIG. 1A is a block diagram of an apparatus for carrier suppression in a frequency referenced passive optical network with point to multi-point topology, in accordance with an embodiment of the present disclosure. With reference to FIG.1A, there is shown a block diagram **100A** of an apparatus **102.** There is further shown a central node **104** and end nodes **106A-106N,** a central node transmitter **108,** a single coherent receiver **110,** a periodic optical filter unit **112,** and a control unit **114.** There is further shown a remote node **116,** a central node optical link **118,** and end node optical links **120A-120N.** There is further show a first optical filter **122,** a second optical filter **124,** an optical filter **126,** multiple optical ports **128A-128N,** microring resonators **130A, 130B** and **130C,** Fabry-Perot etalons **132A, 132B** and **132C,** multi-cavity etalons **134A, 134B** and **134C,** Mach-Zehnder interferometers **136A, 136B, 136C** and **136D,** a photodiode (PD) **138,** a thermo-electronic controller (TEC) **140,** a phase modulator **142,** an electro-optic modulator **144,** and an intra-cavity etalon **146.**

In one aspect, the present disclosure provides an apparatus **102** for carrier suppression in a frequency referenced passive optical network, PON, with point to multi-point, P2MP, topology comprising a central node **104** and end nodes **106A-106N,** where each end node **106A-106N** is configured to generate an intensity-modulated optical uplink signal and to lock a central frequency of the intensity-modulated optical uplink signal to one of reference tones of a downlink frequency comb signal broadcasted by a central node transmitter **108,** and the central node **104** comprises a single coherent receiver **110** for detecting a combined uplink signal, the combined uplink signal comprising the intensity-modulated optical uplink signals from the end nodes **104A-104N,** the apparatus **102** being arranged in the central node **104** and comprising:
a periodic optical filter unit **112** configured for suppressing residual optical carriers in the combined uplink signal by filtering a portion of the downlink frequency comb signal and the combined uplink signal, and
a control unit **114** configured for monitoring a power of the filtered portion of the downlink frequency comb signal and spectrally aligning the periodic optical filter unit **112** with the downlink frequency comb signal based on the power of the filtered portion of the downlink frequency comb signal.

The apparatus **102** is configured for carrier suppression in a frequency referenced passive optical network with point to multi-point topology that comprises the central node **104** and end nodes **106A-106N.** The passive optical network corresponds to a shared optical fiber (or a fiber-optic) network utilizing the point to multi-point topology. The point to multi-point topology (or communication) is based on a power-split network where a downlink signal, such as a reference signal (or downlink frequency comb signal, an optical frequency, wavelength), is broadcasted from the central node **104** to each of the end node **106A-106N.** The apparatus **102** in comparison to the conventional approach, is used to overcome the problem of residual optical carrier frequency and also of carrier suppression in frequency division multiplexing (FDM) systems using low-cost components.

The central node **104** is a starting point for the passive optical network (PON). The central node **104** includes the central node transmitter **108** that is configured to transmit information in the form of an optical signal, such as the downlink frequency comb signal (or wavelengths) to each end node **106A-106N** through the remote node **116** and the central node optical link **118.** The central node **104** further includes the single coherent receiver **110** for detecting a combined uplink signal, the combined uplink signal comprising the intensity-modulated optical uplink signals from the end nodes **106A-106N.** In an example, the central node **104** is also configured to coordinate the multiplexing between the end nodes **106A-106N.** In another example, the central node **104** has two float transmission directions, such as an upstream transmission (e.g., to receive data from the end nodes **106A-106N**) and a downstream transmission (e.g., transmit data to the end nodes **106A-106N**). The central node **104** may also be referred to as central offices (OC), optical line terminals (OLT), optical line termination (OLT), and the like.

The end nodes **106A-106N** include suitable logic, circuitry, interfaces and/or code that is configured to receive an optical signal via the respective end node optical links **120A-120N** and the remote node **116.** Each end node **106A-106N** is configured to generate an intensity-modulated optical uplink signal and to lock a central frequency of the intensity-modulated optical uplink signal to one of the reference tones of a downlink frequency comb signal broadcasted by a central node transmitter **108.** In an example, each end node **106A-106N** may further convert the optical signal to an electrical signal. Each end node **104A-104N** is further configured to send, aggregate, and processes different types of data coming from different users associated therewith and transmit the intensity-modulated optical uplink signal to the central node **104.** In an example, the intensity-modulated optical uplink signal is transmitted using an intensity-modulated transmitter. In an example, each end node **106A-106N** may also be referred to as optical network terminals (ONT), optical network units (ONU), and the like.

The central node transmitter **108** is an optical transmitter, which includes suitable logic, circuitry, interfaces and/or code that is configured to transmit information in the form of an optical signal through optical links, such as the central node optical link **118.** The central node transmitter **108** may also be referred to as an optical module. Examples of the central node transmitter **108** include but are not limited to a transmitter, an optical transmitter, or a fiber optic transmitter, and the like.

The single coherent receiver **110** is configured to receive and detect the combined uplink signal from the end nodes **106A-106N.** In an example, the single coherent receiver **110** detects information in the form of an optical signal through the central node optical link **118** and converts the optical signal into the electric signal. The single coherent receiver **110** may also be referred to as an optical module. Examples of the single coherent receiver **110** include, but are not limited to, a receiver, an optical receiver, or a fiber optic receiver, and the like.

The periodic optical filter unit **112** includes suitable logic, circuitry, interfaces and/or code that is configured for filtering a portion of the downlink frequency comb signal and the combined uplink signal to suppress residual optical carriers of all end nodes **106A-106N** in the combined uplink signal. In an example, the periodic optical filter unit **112** further includes the first optical filter **122,** the second optical filter **124,** and the optical filter **126.** The periodic optical filter unit **112** may also be referred to as a tunable optical filter (TOF).

The control unit **114** includes suitable logic, circuitry, interfaces and/or code that is configured to monitor the power of the filtered portion of the downlink frequency comb signal. Further, the control unit **114** is configured to spectrally align the periodic optical filter unit **112** with the downlink frequency comb signal based on the power of the filtered portion of the downlink frequency comb signal.

The remote node **116** includes suitable logic, circuitry, interfaces and/or code that is configured to be used in the passive optical network (PON) with a point to multi-point (P2MP) topology. The remote node **116** enables a communication between the central node **104** and the end nodes **106A-106N.**

The central node optical link **118** and each of the end node optical links **120A-120N** is a bidirectional communication link that comprises a double end-to-end optical circuit, which provides a data connection medium between two points. Examples of the central node optical link **118** and the end node optical links **120A-120N** include, but are not limited to, an optical fiber (such as multimode optical fiber, a single-mode optical fiber, or a plastic optical fiber), or an active optical cable (AOC), or a full-duplex optical link.

The first optical filter **122,** the second optical filter **124,** and the optical filter **126** include a suitable logic, circuitry, interfaces and/or code that is configured to perform filtering operation. The second optical filter **124** is identical to the first optical filter **122.** In an example, the first optical filter **122** and the second optical filter **124** includes one of the microring resonator **130A,** the Fabry-Perot etalon **132A,** the multi-cavity etalon **134A,** and the Mach-Zehnder interferometer **136A.** Similarly, the second optical filter **124** includes one of the microring resonator **130B,** the Fabry-Perot etalon **132B,** the multi-cavity etalon **134B,** and the Mach-Zehnder interferometer **136B.** In another example, the optical filter **126** having multiple optical ports **128A-128N** includes one of the microring resonator **130C,** the Fabry-Perot etalon **132C,** the multi-cavity etalon **134C,** and the Mach-Zehnder interferometer **136C.**

Multiple optical ports **128A-128N** include suitable logic, circuitry, interfaces and/or code that are configured to pass different optical signals, such as the downlink frequency comb signal and the combined uplink signal. Each of the microring resonators **130A, 130B,** and **130C** is configured to exhibit resonance or resonant behavior. Each of the Fabry-Perot etalon **132A, 132B,** and **132C,** the multi-cavity etalon **134A, 134B** and **134C,** and the intra-cavity etalon **146** is an optical cavity in which optical waves can pass through the optical cavity only when they are in resonance with the optical cavity. In an example, each Fabry-Perot etalon **132A, 132B,** and **132C** includes two mirrors (or lens).

Each Mach-Zehnder interferometer **136A, 136B, 136C,** and **136D** includes suitable logic, circuitry, interfaces and/or code that is configured to determine the relative phase shift variations between two collimated beams of an optical signal. The photodiode **138** is also referred to as semiconductor photodiodes, which is configured to convert an optical signal into an electrical signal.

The thermo-electronic controller **140** includes suitable logic, circuitry, interfaces and/or code that is configured to control a wavelength of an optical signal. In an example, the thermo-electronic controller **140** is configured to tune either the first optical filter **122** (and the second optical filter **124**) or the downlink frequency comb signal (or optical frequency comb generator).

The phase modulator **142** and the electro-optic modulator **144** include suitable logic, circuitry, interfaces and/or code that is configured to modulate an optical signal, such as to modulate the downlink frequency comb signal.

In operation, each end node **106A-106N** is configured to generate an intensity-modulated optical uplink signal and to lock a central frequency of the intensity-modulated optical uplink signal to one of reference tones of a downlink frequency comb signal broadcasted by a central node transmitter **108.** The central node **104** comprises a single coherent receiver **110** for detecting a combined uplink signal, the combined uplink signal comprising the intensity-modulated optical uplink signals from the end nodes **106A-106N.** The apparatus **102** being arranged in the central node **104** and comprising the periodic optical filter unit **112** configured for suppressing residual optical carriers in the combined uplink signal by filtering a portion of the downlink frequency comb signal and the combined uplink signal, and a control unit **114** configured for monitoring a power of the filtered portion of the downlink frequency comb signal and spectrally aligning the periodic optical filter unit **112** with the downlink frequency comb signal based on the power of the filtered portion of the downlink frequency comb signal. In other words, each end node **106A-106N** generates the intensity-modulated optical uplink signal (e.g., via uplink laser source) with a central frequency, and the central node transmitter **108** broadcasts the downlink frequency comb signal with reference tones. In an example, the downlink frequency comb signal is generated by an optical frequency comb generator (OFCG) of the central node **104.** In another example, the downlink frequency comb signal keeps all reference tones (or frequencies) in on stage. Thereafter, each end node **106A-106N** locks the central frequency of the intensity-modulated optical uplink signal to one of the reference tones of the downlink frequency comb signal, such as to transmit the intensity-modulated optical uplink signal at the central frequency to the central node **104.** In an example, a frequency locked loop (FLL) is used in each end node **106A-106N** to lock the central frequency of the intensity-modulated optical uplink signal in an adaptive manner and with a high accuracy based on a type of an intensity modulator used in each end node **106A-106N.** Thereafter, the intensity-modulated optical uplink signals generated by the end nodes **106A-106N,** such as the combined uplink signal, is further detected (or received) by the single coherent receiver **110** of the central node **104.** In an example, the combined uplink signal detected by the single coherent receiver **110** inherently contains large residual optical carriers at its respective transmission frequency. In another example, the combined uplink signal, as well as the downlink frequency comb signal, are further received by the periodic optical filter unit **112.** Thereafter, the periodic optical filter unit **112** filters a portion of the downlink frequency comb signal. In an example, the filtered portion of the downlink frequency comb signal is used by the periodic optical filter unit **112** to suppress the residual optical carriers in the combined uplink signal of the end nodes **106A-106N.** Beneficially, in comparison with the conventional approach, a centralized control within the central node **104** is simple (i.e., not complex), as the residual optical carriers of each end node **106A-106N** are suppressed simultaneously within the periodic optical filter unit **112** of the central node **104.**

In an example, each end node **106A-106N** might be switched on/off occasionally (e.g., upon registration/de-registration), which may lead to an issue in the reliability of an alignment with periodic optical filter unit **112.** Therefore, the control unit **114** monitors the power of the filtered portion of the downlink frequency comb signal, as the downlink frequency comb signal keeps all reference tones in on stage all the time. In an example, the filtered portion of the downlink frequency comb signal has more than -40 decibel-milliwatts (dBm) power. The power of the filtered portion of the downlink frequency comb signal is further used by the control unit **114** to align the periodic optical filter unit **112** spectrally with the downlink frequency comb signal. In other words, the apparatus **102** of the present disclosure is configured to monitor the power of the filtered portion of the downlink frequency comb signal (or downlink reference frequency comb signal) and provides feedback to the control unit **114.** As a result, the feedback is further used by the apparatus **102** to spectrally align the downlink frequency comb signal and the periodic optical filter unit **112** (or optical filter). Further, the periodic optical filter unit **112** suppresses the residual optical carriers in the combined uplink signal of the end nodes **106A-106N** efficiently. In an example, the control unit **114** is configured to tune either the downlink frequency comb signal (e.g., via wavelength) or the periodic optical filter unit **112** (e.g., via temperature) to spectrally align the downlink frequency comb signal with the periodic optical filter unit **112.** Beneficially, in comparison with the conventional approaches, the apparatus **102** of the present disclosure provides an improved and a novel approach to align the downlink frequency comb signal spectrally with the periodic optical filter unit **112.** In an example, the spectral alignment is used to minimize the power of the filtered portion of the downlink frequency comb signal. Beneficially, the suitable alignment leads to a minimum detected power (or output power). In another example, the alignment between the downlink frequency comb signal and the periodic optical filter unit **112** is equivalent to the alignment between the combined uplink signal of each end node **106A-106N** and the periodic optical filter unit **112,** with negligible frequency offset (e.g., few megahertz (MHz). Therefore, a filter profile of the periodic optical filter unit **112** does not get affected with such frequency offset, as the combined uplink signal of each end node **106A-106N** has a dedicated gap between residual optical carriers and the combined uplink signal sideband to tolerate such frequency offset.

In an implementation, the spectral alignment of the downlink frequency comb signal (or wavelength) to the periodic optical filter unit **112** is centralized in the central node **104** with a global control mechanism. In an example, the periodic optical filter unit **112** is well aligned with the downlink frequency comb signal in the central node **104.** Further, the control unit **114** continuously monitors the power of the filtered portion of the downlink frequency comb signal at the output of the periodic optical filter unit **112** (or filter path), which is dedicated to the control unit **114** for monitoring purposes. In another example, the downlink frequency comb signal generated in central node **104** is sent to all end nodes **106A-106N,** and each end node **106A-106N** uses a frequency locked loop to lock the central frequency (or laser frequency) to one of the reference tones (e.g., with megahertz (MHz) level accuracy). Moreover, the reference tones of the downlink frequency comb signal are tuned in the apparatus **102,** which is similar to tuning the residual optical carriers. Therefore, the downlink frequency comb signal globally coordinates reference tone, residual optical carrier, and the periodic optical filter unit **112.** Further, the apparatus **102** of the present disclosure suppress (or filter) the residual optical carriers efficiently with the alignment approach.

In accordance with an embodiment, the periodic optical filter unit **112** has a free spectral range close to a channel spacing of the frequency referenced passive optical network (PON). In an example, the periodic optical filter **112** has a free spectral range equal to the channel spacing of the referenced passive optical network (PON), where the free spectral range may have deviations due to the limited manufacturing or control accuracy. Moreover, as the free spectral range is close to the channel spacing of the frequency referenced passive optical network thus, the periodic optical filter unit **112** in the central node **104** suppresses all residual optical carriers simultaneously. Moreover, the alignment between the downlink frequency comb signal and the periodic optical filter unit **112** is controlled based on a monitored, filtered portion of the downlink frequency comb signal in comparison to the conventional approach where the combined uplink signal is used.

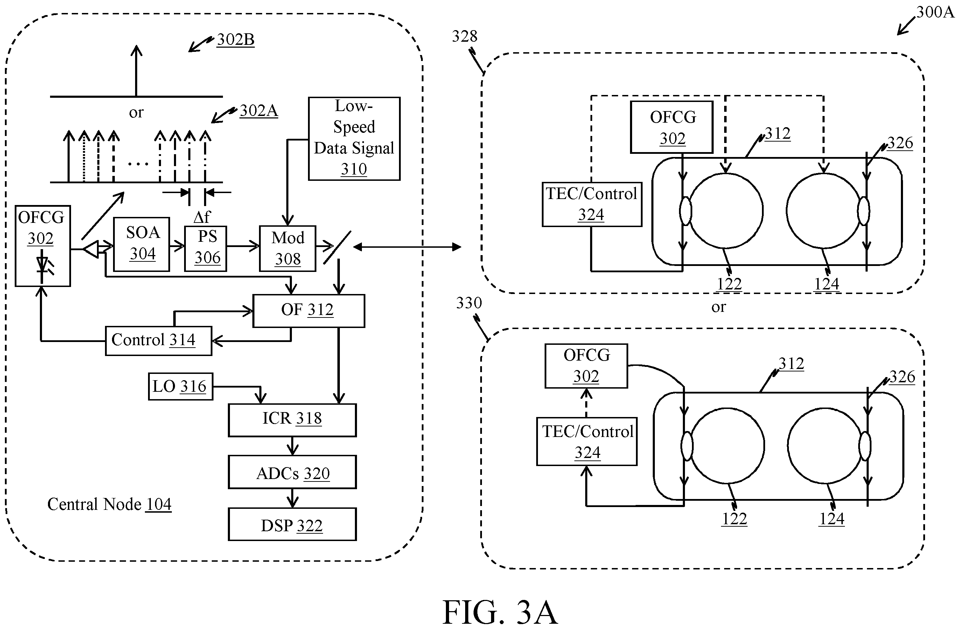

In accordance with an embodiment, the periodic optical filter unit **112** comprises a first optical filter **122** and a second optical filter **124,** identical to the first optical filter **122,** with the portion of the downlink frequency comb signal passing through the first optical filter **122** and the combined uplink signal passing through the second optical filter **124.** In other words, two identical optical filters, such as the first optical filter **122** and the second optical filter **124,** are included by the periodic optical filter unit **112,** as further shown and described in FIG.3A. In an implementation, the first optical filter **122** and the second optical filter **124** are identical with respect to material, size, propagation loss, temperature and so on as a result of which they have same filter properties, and they behave similarly when a same control parameter (such as temperature variation) is applied. Moreover, the second optical filter **124** is used by the periodic optical filter unit **112** to pass (and filter) the combined uplink signal of each end node **106A-106N,** and the first optical filter **122** is used by the periodic optical filter unit **112** to pass (and filter) the portion of the downlink frequency comb signal of the central node **104.** In other words, a dedicated optical filter (or a dedicated direction/path), such as the second optical filter **124** of the periodic optical filter unit **112** (or a single optical filter) is used to filter (or suppress) the combined uplink signal. Further, another identical optical filter, such as the first optical filter **122** of the periodic optical filter unit **112** is dedicated to monitor the downlink frequency comb signal power for alignment control. Beneficially, the spectral alignment of the downlink frequency comb signal to the periodic optical filter unit **112** does not affect the uplink communication that already exists. This is because the alignment control and filter process of the combined uplink signal are separated in different filters (or different direction/paths) of the single filter, such as the periodic optical filter unit **112.** Further, such a tuning algorithm is based on the minimized output power of the first optical filter **122.** Therefore, a desired and suitable alignment is achieved at minimum output power and with a reduced cost.

In accordance with an embodiment, each of the first optical filter **122** and the second optical filter **124** comprises one of a microring resonator **130A** and **130B,** a Fabry-Perot etalon **132A** and **132B,** a multi-cavity etalon **134A** and **134B,** and a Mach-Zehnder interferometer **136A** and **136B.** In this implementation, one of the microring resonator **130A,** the Fabry-Perot etalon **132A,** the multi-cavity etalon **134A,** and the Mach-Zehnder interferometer **136A** is used by the first optical filter **122** to filter the downlink frequency comb signal at the central node **104.** Similarly, one of the microring resonator **130B,** the Fabry-Perot etalon **132B,** the multi-cavity etalon **134B,** and the Mach-Zehnder interferometer **136B** is used by the second optical filter **124** to filter the combined uplink signal at the central node **104.** As a result, all the residual optical carriers of each end node **106A-106N** are suppressed simultaneously. Therefore, the apparatus **102** of the present disclosure solves the residual optical carrier problems with improved performance in comparison to the conventional approach. In an example, the microring resonator **130A** (or micro-ring filter) may consist of N (e.g., N=1) cascaded rings with through port and/or drop port, and the Fabry-Perot etalon **132A** (F-P etalon filter) consists of two mirrors and/or lens. Functionally the microring resonator **130A** through port and drop port correspond to the reflectance and transmittance of the Fabry-Perot etalon **132A,** respectively.

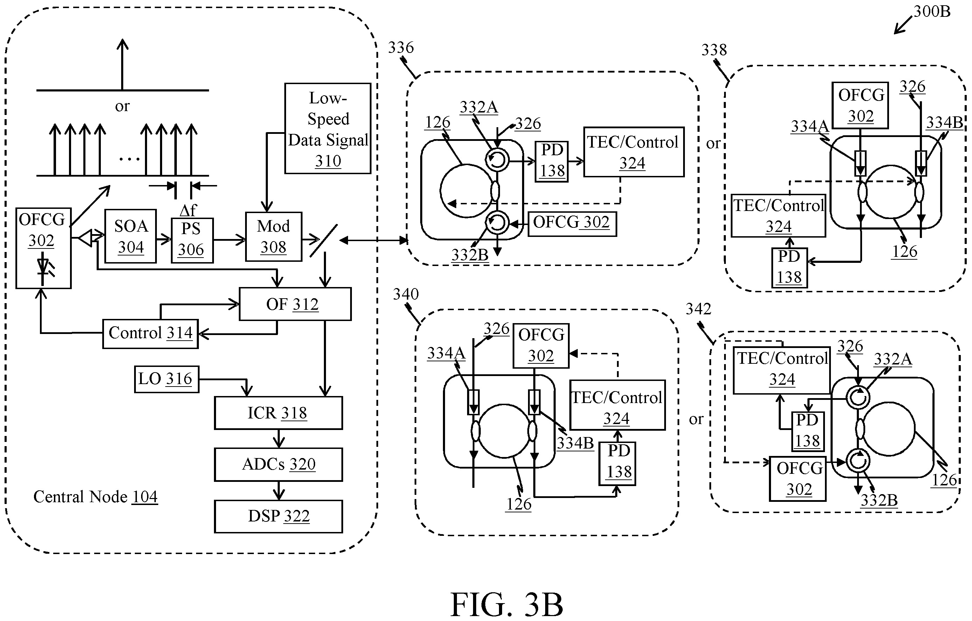

In accordance with an embodiment, the periodic optical filter unit **112** comprises an optical filter **126** with multiple optical ports **128A-128N** wherein the portion of the downlink frequency comb signal passes in one direction or path of the optical filter **126** and the combined uplink signal passes in another direction or path of the optical filter **126.** In other words, the optical filter **126** with multiple optical ports **128A-128N** is included by the periodic optical filter unit **112,** as further shown and described in FIG.3B. In an example, the optical filter **126** is used to tune the combined uplink signal frequency (or laser frequency) or the periodic optical filter unit **112.** In such a case, the portion of the downlink frequency comb signal is passed in one direction or path of the optical filter **126,** and the combined uplink signal is passed in another direction or path of the optical filter **126.** In other words, the portion of the downlink frequency comb signal is monitored in one direction of the optical filter **126,** and the combined uplink signal is filtered (or suppressed) in another direction or path of the optical filter **126.** In an implementation, the optical filter **126** must be symmetrical regarding filter properties, including the frequency response, so the features of the optical filter **126** are identical in opposite directions or different paths. Beneficially, such tuning/control algorithm of the optical filter **126** minimizes the output power of the control (or the control units) direction/path. Beneficially, the output power of the downlink frequency comb signal is further considered to tune either the optical filter **126** or the downlink frequency comb signal.

In accordance with an embodiment, the optical filter **126** comprises one of a microring resonator **130C,** a Fabry-Perot etalon **132C,** a multi-cavity etalon **134C,** and a Mach-Zehnder interferometer **136C.** In this implementation, one of the microring resonator **130B,** the Fabry-Perot etalon **132C,** the multi-cavity etalon **134C,** and the Mach-Zehnder interferometer **136C** is used by the optical filter **126** to filter the downlink frequency comb signal as well as the combined uplink signal at the central node **104.** As a result, all the residual optical carriers of each end node **106A-106N** are suppressed simultaneously. Further, apparatus **102** of the present disclosure solves the residual optical carrier problems with much-improved performance.

In accordance with an embodiment, the control unit **114** comprises a photodiode, PD, **138** and is configured for spectrally aligning the periodic optical filter unit **112** with the downlink frequency comb signal to minimize the power of the filtered portion of the downlink frequency comb signal. In an example, the downlink frequency comb signal as broadcasted by the central node transmitter **108** is initially received by the photodiode **138** of the control unit **114,** such as to monitor the power of the filtered portion of the downlink frequency comb signal. In an example, the downlink frequency comb signal is applied to the first optical filter **122,** whose output is monitored by the photodiode **138** of the control unit **114.** Thereafter, based on the output of the photodiode **138,** the control unit **114** aligns the periodic optical filter unit **112** spectrally with the downlink frequency comb signal and minimizes the power of the filtered portion of the downlink frequency comb signal. Beneficially in comparison with the conventional approach, the control unit **114** of the present disclosure is easy to execute, as it relies on the downlink frequency comb signal and not on the combined uplink signal.

In accordance with an embodiment, the control unit **114** further comprises one of a thermo-electronic controller, TEC **140,** a phase modulator **142,** an electro-optic modulator **144,** a Mach-Zehnder interferometer **136D,** an intra-cavity etalon **146.** In an example, the power of the filtered portion of the downlink frequency comb signal is applied to one of the thermo-electronic controller **140,** the phase modulator **142,** the electro-optic modulator **144,** the Mach-Zehnder interferometer **136D,** or the intra-cavity etalon **146,** such as to tune either the first optical filter **122** (and the second optical filter **124**) or the downlink frequency comb signal (or optical frequency comb generator). Beneficially, based on the tuning of the downlink frequency comb signal, the control unit **114** is configured to minimize/maximize the residual optical carriers at the output of the periodic optical filter unit **112.**

In accordance with an embodiment, the control unit **114** is configured for spectrally aligning the periodic optical filter unit **112** with the downlink frequency comb signal by means of tuning a central frequency of the downlink frequency comb signal. In an implementation, spectral alignment between the residual carriers of the combined uplink signal and transmission minima of the periodic optical filter unit **112** is achieved by tuning the central frequency of the downlink frequency comb signal. In an example, tuning the central frequency of the downlink frequency comb signal is executed periodically to track the drift caused by environmental changes (e.g., temperature). Further, a suitable alignment between the periodic optical filter unit **112** with the downlink frequency comb signal leads to a minimum detected output power of the control unit **114.** In another example, tuning the central frequency of the downlink frequency comb signal causes variation in a normalized output power of the periodic optical filter unit **112** and also on an extinction ratio (ER). As a result, the higher the extinction ratio of the periodic optical filter unit **112,** the more distinguishable the output power at different central frequencies.

In accordance with an embodiment, the control unit **114** is configured for spectrally aligning the periodic optical filter unit **112** with the frequency comb signal by means of tuning a spacing of the downlink frequency comb signal. By virtue of tuning a spacing of the downlink frequency comb signal, deviation in the downlink frequency comb signal is minimized.

In accordance with an embodiment, the control unit **114** is configured for spectrally aligning the periodic optical filter unit **112** with the frequency comb signal by means of tuning a central frequency of the periodic optical filter unit **112.** In this implementation, tuning the central frequency of the periodic optical filter unit **112** minimizes/maximizes the output power of the periodic optical filter unit **112** (or the first optical filter **122**).

Therefore, the apparatus **102** of the present disclosure provides an improved and novel approach to suppress the residual optical carriers efficiently with the periodic optical filter unit **112.** Moreover, the control unit **114** of the apparatus **102** provides an improved approach to align the downlink frequency comb signal spectrally with the periodic optical filter unit **112.** Moreover, the reference tones of the downlink frequency comb signal are tuned in the apparatus **102,** which is similar to tunning of the residual optical carriers, which further globally coordinate reference tone (or frequency), residual optical carrier, and the periodic optical filter unit **112.** Beneficially, the combined uplink signal of each end node **106A-106N** has a dedicated gap between residual optical carriers and a sideband of the combined uplink signal to tolerate the frequency offset, and a filter profile of the periodic optical filter unit **112** does not make much difference with frequency offset.

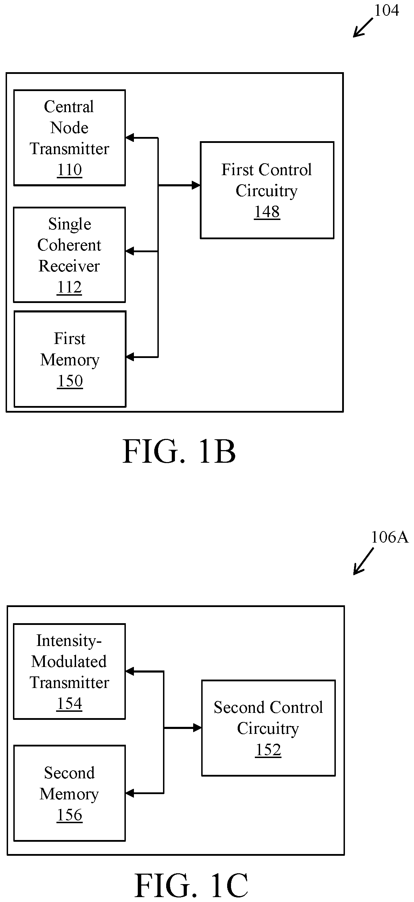

FIG. 1B is a block diagram that illustrates various exemplary components of a central node, in accordance with an embodiment of the present disclosure. FIG. 1B is described in conjunction with elements from FIGs. 1A. With reference to FIG. 1B, there is shown the central node **104** that includes a first control circuitry **148,** a first memory **150,** the central node transmitter **108,** and the single coherent receiver **110.**

The first control circuitry **148** is configured to broadcast the downlink frequency comb signal from the central node transmitter **108** of the central node **104** to each end node **106A-106N.** In an implementation, the first control circuitry **148** may be a general-purpose processor. Examples of the first control circuitry **148** include, but is not limited to a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. It will be appreciated that the operations performed at the central node transmitter **108** are potentially performed by the first control circuitry **148** of the central node **104.**

The first memory **150** includes suitable logic, circuitry, and interfaces that may be configured to store the data received from the end nodes **106A-106N** and also store the instructions executable by the first control circuitry **148.** Examples of implementation of the first memory **150** may include, but are not limited to, Electrically Erasable Programmable Read-Only Memory (EEPROM), Random Access Memory (RAM), Hard Disk Drive (HDD), Flash memory, Solid-State Drive (SSD), or CPU cache memory.

FIG. 1C is a block diagram that illustrates various exemplary components of an end node, in accordance with an embodiment of the present disclosure. FIG. 1C is described in conjunction with elements from FIGs. 1A. With reference to FIG. 1C, there is shown a second control circuitry **152,** an intensity-modulated transmitter **154,** a second memory **156,** the end node **106A** that includes the intensity-modulated transmitter **108A.**

The second control circuitry **152** is configured to receive the downlink frequency comb signal from the central node transmitter **108** of the central node **104.** In an implementation, the second control circuitry **152** may be a general-purpose processor. Examples of the second control circuitry **152** include, but are not limited to a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. It will be appreciated that the operations performed at the intensity-modulated transmitter **108A** are potentially performed by the second control circuitry **152** of the end node **106A.** Optionally, the end node **106A** may further include a memory for storage purposes (not shown).

The intensity-modulated transmitter **154** is an optical transmitter, which includes suitable logic, circuitry, interfaces and/or code that is configured to transmit information in the form of an optical signal through optical links, such as the end node optical links **120A-120N.** The intensity-modulated transmitter **154** may also be referred to as an optical module. Examples of the intensity-modulated transmitter **154** include but are not limited to a transmitter, an optical transmitter, or a fiber optic transmitter, and the like.

The second memory **156** includes suitable logic, circuitry, and interfaces that may be configured to store the data received from the central nodes **104** and also store the instructions executable by the second control circuitry **152.** Examples of implementation of the second memory **156** may include, but are not limited to, Electrically Erasable Programmable Read-Only Memory (EEPROM), Random Access Memory (RAM), Hard Disk Drive (HDD), Flash memory, Solid-State Drive (SSD), or CPU cache memory.

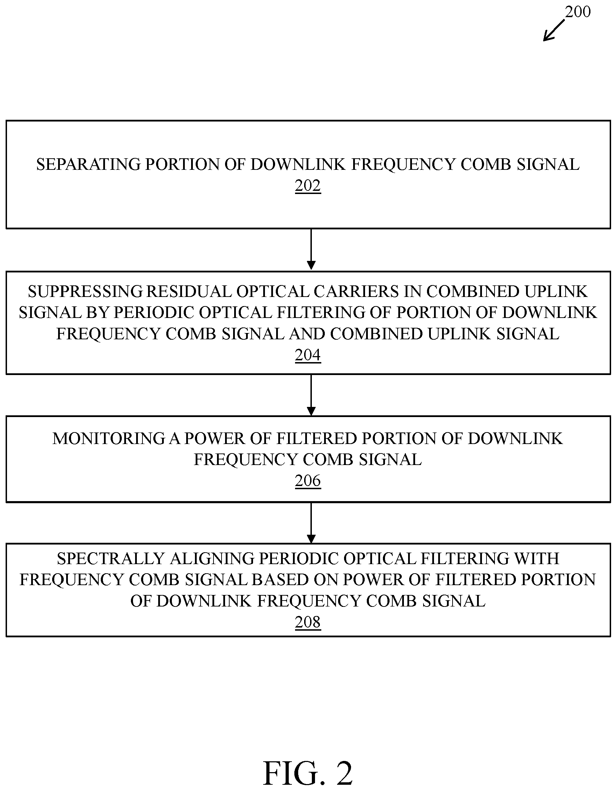

FIG. 2 is a flowchart of a method of carrier suppression in a frequency referenced passive optical network (PON) with point to multi-point (P2MP) topology, in accordance with an embodiment of the present disclosure. FIG. 2 is described in conjunction with elements from FIG. 1A. With reference to FIG. 2, there is shown a method **200.** The method **200** includes steps **202** to **208.**

In another aspect the present disclosure provides a method **200** of carrier suppression in a frequency referenced passive optical network, PON, with point to multi-point, P2MP, topology comprising a central node **104** and end nodes **106A-106N,** where each end node **106A-106N** is configured to generate an intensity-modulated optical uplink signal and lock a central frequency of the intensity-modulated optical uplink signal to one of reference tones of a downlink frequency comb signal broadcasted by a central node transmitter **108,** and the central node **104** comprises a single coherent receiver **110** for detecting a combined uplink signal, the combined uplink signal comprises the intensity-modulated optical uplink signals from the end nodes **106A-106N,** the method comprising:
separating a portion of the downlink frequency comb signal,
suppressing residual optical carriers in the combined uplink signal by periodic optical filtering the portion of the downlink frequency comb signal and the combined uplink signal,
monitoring a power of the filtered portion of the downlink frequency comb signal, and
spectrally aligning the periodic optical filtering with the frequency comb signal based on the power of the filtered portion of the downlink frequency comb signal.

The method **200** of carrier suppression in a frequency referenced passive optical network (PON) with point to multi-point (P2MP) topology comprising a central node **104** and end nodes **106A-106N,** where each end node **106A-106N** is configured to generate an intensity-modulated optical uplink signal and lock a central frequency of the intensity-modulated optical uplink signal to one of reference tones of a downlink frequency comb signal broadcasted by a central node transmitter **108,** and the central node **104** comprises a single coherent receiver **110** for detecting a combined uplink signal, the combined uplink signal comprising the optical uplink signals from the end nodes **106A-106N.** In other words, the method **200** comprises, broadcasting the downlink frequency comb signal with reference tones by the central node transmitter **108** of the central node **104.** The method **200** further comprises, generating the intensity-modulated optical uplink signal (e.g., via uplink laser source) with a central frequency by each end node **106A-106N.** Thereafter, each end node **106A-106N** locks the central frequency of the intensity-modulated optical uplink signal to one of the reference tones of the downlink frequency comb signal, such as to transmit the intensity-modulated optical uplink signal at the central frequency to the central node **104.** Thereafter, the intensity-modulated optical uplink signals generated by the end nodes **106A-106N,** such as the combined uplink signal is further detected (or received) by the single coherent receiver **110** of the central node **104.**

At step **202,** the method **200** comprises separating a portion of the downlink frequency comb signal. In an example, the downlink frequency comb signal generated at a time of starting-up by the central node **104** (or optical line terminals (OLT) module) is analyzed under test. Further, the portion of the downlink frequency comb signal is separated. For example, a reference tone is separated from the downlink frequency comb signal to observe the behavior of the combined uplink signal. Beneficially, the method **200** facilitates a centralized control by analyzing the downlink frequency comb signal.

At step **204,** the method **200** comprises suppressing residual optical carriers in the combined uplink signal by periodic optical filtering of the portion of the downlink frequency comb signal and the combined uplink signal. In an example, the combined uplink signal detected by the single coherent receiver **110** inherently contains large residual optical carriers at its respective transmission frequency. In another example, the combined uplink signal, as well as the portion of the downlink frequency comb signal, are further received by the periodic optical filtering. Thereafter, the portion of the downlink frequency comb signal, such as a filtered portion of the downlink frequency comb signal is used by the periodic optical filtering to suppress the residual optical carriers in the combined uplink signal of the end nodes **106A-106N.** Beneficially, in comparison with the conventional approach, the method **200** provides a simple (i.e., not complex) centralized control within the central node **104,** as the residual optical carriers of each end node **106A-106N** are suppressed simultaneously by the periodic optical filtering.

At step **206,** the method **200** comprises monitoring a power of the filtered portion of the downlink frequency comb signal. In an example, each end node **106A-106N** might be switched on/off occasionally (e.g., upon registration/de-registration), which may lead to an issue in the reliability of the alignment process. Beneficially, the method **200** comprises, monitoring the power of the filtered portion of the downlink frequency comb signal, and not of the combined uplink signal, as the downlink frequency comb signal keeps all reference tones in on stage all the time. In an example, the filtered portion of the downlink frequency comb signal has more than -40 decibel-milliwatts (dBm) power.

At step **208,** the method **200** comprises spectrally aligning the periodic optical filtering with the frequency comb signal based on the power of the filtered portion of the downlink frequency comb signal. In other words, the method **200** comprises monitoring the downlink frequency comb signal and providing a feedback (e.g., to the control unit **114**). The feedback is further used by the method **200** for spectrally aligning the downlink frequency comb signal with the periodic optical filtering (or optical filter) via tuning either the downlink frequency comb signal (e.g., wavelength) or the periodic optical filter filtering (e.g., via temperature). Beneficially, in comparison with the conventional approaches, the method **200** of the present disclosure providing an improved and a novel approach for aligning the downlink frequency comb signal spectrally with the periodic optical filtering. In an example, spectral alignment is used to minimize the power of the filtered portion of the downlink frequency comb signal. In another example, the spectral alignment between the downlink frequency comb signal and the periodic optical filtering is equivalent to the alignment between the combined uplink signal and the periodic optical filtering with negligible frequency offset (e.g., few megahertz (MHz). Therefore, the filter profile of the periodic optical filtering does not get affected with such frequency offset, and the combined uplink signal of each end node **106A-106N** have a dedicated gap between residual optical carriers and combined uplink signal sideband to tolerate such frequency offset.

In accordance with an embodiment, the periodic optical filtering has a free spectral range close to a channel spacing of the frequency referenced passive optical network (PON). As the free spectral range close to a channel spacing of the frequency referenced passive optical network thus, the periodic optical filtering (e.g., using the periodic optical filter unit **112**) in the central node **104** suppresses all residual optical carriers simultaneously. Moreover, the alignment between the downlink frequency comb signal and periodic optical filtering is controlled based on monitoring the filtered portion of the transmitted downlink comb signal.

In accordance with an embodiment, the periodic optical filtering comprises: passing the portion of the downlink frequency comb signal through a first optical filter **122,** and passing the combined uplink signal through a second optical filter **124,** identical to the first optical filter **122.**In other words, two identical optical filters, such as the first optical filter **122** and the second optical filter **124,** are included by the periodic optical filtering. In an implementation, the first optical filter **122** and the second optical filter **124** are identical with respect to a material, size, propagation loss, temperature and so on as a result of which they have the same filter properties, and they behave similarly when a same control parameter (such as temperature variation) applied. Moreover, the second optical filter **124** is used by the periodic optical filtering for passing (and filtering) the combined uplink signal of each end node **106A-106N,** and the first optical filter **122** is used for passing (and filtering) the portion of the downlink frequency comb signal of the central node **104.** In other words, a dedicated optical filtering (or a dedicated direction/path) is used for passing the combined uplink signal, such as using the second optical filter **124** of the periodic optical filtering (or a single optical filter). Further, another identical optical filter, such as the first optical filter **122** of the periodic optical filtering is dedicated to monitoring the downlink frequency comb signal power for alignment control. Beneficially, the spectral alignment of the downlink frequency comb signal to the periodic optical filtering does not affect the uplink communication that already exists. This is because the alignment control and filtering process of the combined uplink signal process is separated in different filters (or different direction/paths) of the single filter, such as the periodic optical filtering. Further, such tuning algorithm is based on the minimized output power of the first optical filter **122,** and the suitable alignment is achieved at minimum output power, with reduced cost.

In accordance with an embodiment, each of the first optical filter **122** and the second optical filter **124** comprises one of a microring resonator **130A** and **130B,** a Fabry-Perot etalon **132A** and **132B,** a multi-cavity etalon **134A** and **134B,** and a Mach-Zehnder interferometer **136A** and **136B.** In this implementation, one of the microring resonator **130A,** the Fabry-Perot etalon **132A,** the multi-cavity etalon **134A,** and the Mach-Zehnder interferometer **136A** is used by the first optical filter **122** for filtering the downlink frequency comb signal at the central node **104.** Similarly, one of the microring resonator **130B,** the Fabry-Perot etalon **132B,** the multi-cavity etalon **134B,** and the Mach-Zehnder interferometer **136B** is used by the second optical filter **124** for filtering the combined uplink signal at the central node **104.** As a result, all the residual optical carriers of each end node **106A-106N** are suppressed simultaneously. Therefore, the method **200** of the present disclosure solves the residual optical carrier problems with a satisfactory level and improved performance in comparison to conventional methods. In an example, the microring resonator **130A** (or micro-ring filter) may consist of N (e.g., N=1) cascaded rings with through port and/or drop port, and the Fabry-Perot etalon **132A** (F-P etalon filter) consists of two mirrors and/or lens. Functionally the microring resonator **130A** through port and drop port correspond to the reflectance and transmittance of the Fabry-Perot etalon **132A,** respectively.

In accordance with an embodiment, the periodic optical filtering comprises passing the portion of the downlink frequency comb signal in one direction or path of an optical filter **126** with multiple optical ports **128A-128N** and passing the combined uplink signal in another direction or path of the optical filter **126.** In an example, the periodic optical filtering including the optical filter **126** with multiple optical ports **128A-128N,** such as the optical filter **126** is used for tuning the combined uplink signal frequency (or laser frequency) or the periodic optical filtering. In such a case, the method **200** comprises, passing the portion of the downlink frequency comb signal in one direction or path of the optical filter **126,** and passing the combined uplink signal in another direction or path of the optical filter **126.** In other words, the portion of the downlink frequency comb signal is monitored in one direction or path of the optical filter **126,** and the combined uplink signal is filtered (or suppressed) in another direction or path of the optical filter **126.** In an implementation, the optical filter **126** must be symmetrical regarding filter properties, including the frequency response, so the features of the optical filter **126** are identical in opposite directions (or different paths). Beneficially, such tuning/control algorithm of the optical filter **126** minimizing the output power of the control direction/path. Beneficially, the output power of the downlink frequency comb signal is further considered to tune either the optical filter **126** or the downlink frequency comb signal.

In accordance with an embodiment, the optical filter **126** comprises one of a microring resonator **130C,** a Fabry-Perot etalon **132C,** a multi-cavity etalon **134C,** and a Mach-Zehnder interferometer **136C.** In this implementation, the method **200** comprises, using one of the microring resonator **130C,** the Fabry-Perot etalon **132C,** the multi-cavity etalon **134C,** and the Mach-Zehnder interferometer **136C** for filtering of the downlink frequency comb signal and the combined uplink signal at the central node **104.** As a result, all the residual optical carriers of each end node **106A-106N** are suppressed simultaneously. Further, method **200** of the present disclosure is solving the residual optical carrier problems with much-improved performance.

In accordance with an embodiment, the monitoring of the power of the filtered portion of the downlink frequency comb signal is conducted by a control unit **114** comprising a photodiode, PD, **138,** and the spectral aligning of the periodic optical filtering with the frequency comb signal comprises minimizing the power of the filtered portion of the downlink frequency comb signal by the control unit **114** through controlling one of a thermo-electronic controller, TEC **140,** a phase modulator **142,** an electro-optic modulator **144,** a Mach-Zehnder interferometer **136D,** and an intra-cavity etalon **146.** In an example, the downlink frequency comb signal as broadcasted by the central node transmitter **108** is initially received by the photodiode **138** of the control unit **114,** such as for monitoring the power of the filtered portion of the downlink frequency comb signal. Thereafter, the result of a monitor signal from the control unit **114** is applied to one of the thermo-electronic controller **140,** the phase modulator **142,** the electro-optic modulator **144,** the Mach-Zehnder interferometer **136D,** or the intra-cavity etalon **146.** In an example, the power of the downlink frequency comb signal is applied to the first optical filter **122,** whose output is monitored by the photodiode **138** of the control unit **114,** and a feedback is used to tune either the first optical filter **122** (and the second optical filter **124**) or the downlink frequency comb signal (or optical frequency comb generator). Beneficially in comparison with the conventional approach, the control unit **114** of the present disclosure is easy to execute, as it relies on the downlink frequency comb signal and not on the combined uplink signal. Moreover, the control unit **114** is beneficial to minimize/maximize the residual optical carriers at the output of the periodic optical filtering.

In accordance with an embodiment, the spectral aligning of the periodic optical filtering with the downlink frequency comb signal comprises tuning a central frequency of the downlink frequency comb signal. In an implementation, spectral alignment between the residual carriers of the combined uplink signal and a transmission minima of the periodic optical filtering is achieved by tuning the central frequency of the downlink frequency comb signal. In an example, tuning the central frequency of the downlink frequency comb signal is executed periodically to track the drift caused by environmental changes (e.g., temperature). Further, the suitable alignment between the periodic optical filtering with the downlink frequency comb signal leads to a minimum detected output power of the control unit **114.** In another example, tuning the central frequency of the downlink frequency comb signal causes variation in a normalized output power of the periodic optical filtering and also on an extinction ratio (ER). As a result, the higher the extinction ratio of the periodic optical filtering, the more distinguishable the output power at different central frequencies.

In accordance with an embodiment, the spectral aligning of the periodic optical filtering with the frequency comb signal comprises tuning a spacing of the downlink frequency comb signal. By virtue of tuning a spacing of the downlink frequency comb signal, deviation in the downlink frequency comb signal is minimized.

In accordance with an embodiment, the spectral aligning of the periodic optical filtering with the frequency comb signal comprises tuning a central frequency of the periodic optical filtering. In this implementation, tuning the central frequency of the periodic optical filtering minimizes/maximizes the output power of the periodic optical filtering (or the first optical filter **122**).

Therefore, the method **200** of the present disclosure comprises providing an improved and novel approach for suppressing the residual optical carriers efficiently with the periodic optical filtering. The method **200** further comprises providing an improved approach for aligning the downlink frequency comb signal spectrally with the periodic optical filtering. Moreover, the reference tones of the downlink frequency comb signal are tuned in the method **200,** which is similar to tunning the residual optical carriers, which further globally coordinate reference tone (or frequency), residual optical carrier, and the periodic optical filtering. Beneficially, the combined uplink signal has a dedicated gap between residual optical carriers and a sideband of the combined uplink signal to tolerate the frequency offset. In addition, the filter profile of the periodic optical filtering does not make much difference with frequency offset.

The steps **202, 204, 206,** and **208** are only illustrative, and other alternatives can also be provided where one or more steps are added, one or more steps are removed, or one or more steps are provided in a different sequence without departing from the scope of the claims herein.

FIG. 3A is a block diagram of an apparatus for carrier suppression in a frequency referenced passive optical network with point to multi-point topology, in accordance with another embodiment of the present disclosure. FIG. 3A is described in conjunction with elements from FIG. 1A. With reference to FIG. 3A a block diagram **300A** that comprises the central node **104.** The central node **104** further includes an optical frequency comb generator (OFCG) **302,** a frequency comb **302A,** a single reference frequency **302B,** a semiconductor amplifier (SOA) **304,** a polarization scrambler **306,** a modulator (Mod) **308,** a low-speed data signal signal **310,** an optical filter **312,** a control **314,** a local oscillator **316,** an integrated coherent receiver (ICR) **318,** an analog to digital converter (ADC) **320,** and a digital signal processing (DSP) **322.** There is further shown a thermo-electronic controller (TEC)/control **324,** and an uplink signal **326.** There is shown a first enlarged view **328** of the optical filter **312,** and the control **314.** There is further shown a second enlarged view **330** of the optical filter **312,** and the control **314.**

The optical frequency comb generator (OFCG) **302** is also referred to as a downlink laser source (or a comb frequency laser). The optical frequency comb generator **302** includes suitable logic, circuitry, interfaces and/or code that is configured to generate downlink frequency comb signal. In an example, the optical frequency comb generator **302** generates the downlink frequency comb signal with the frequency comb **302A,** which includes a plurality of frequency tones. In another example, the optical frequency comb generator **302** generates the downlink frequency comb signal with the single reference frequency **302B,** which includes a single frequency tone.

The semiconductor amplifier (SOA) **304** includes suitable logic, circuitry, interfaces and/or code that is configured to amplify the downlink frequency comb signal. The semiconductor amplifier (SOA) **304** may also be referred to as an optical amplifier.

The polarization scrambler **306** includes suitable logic, circuitry, interfaces and/or code that is configured to vary a state of polarization (SOP) of the downlink frequency comb signal. The polarization scrambler **306** may also be referred to as a polarization controller.

The modulator **308** includes suitable logic, circuitry, interfaces and/or code that is configured to modulate the downlink frequency comb signal by the low-speed data signal **310.** The low-speed data signal **310** is also referred to as modulating signal. The low-speed data signal **310** is used to indicate a frequency assigned to each end node **106A-106N.**

The optical filter (OF) **312** corresponds to the periodic optical filter unit **112** of FIG. 1A. The optical filter **312** includes suitable logic, circuitry, interfaces and/or code that is configured for filtering a portion of the downlink frequency comb signal and the uplink signal **326** to suppress residual optical carriers of the end nodes **106A-106N** in the uplink signal **326.**

The control **314** corresponds to the control unit **114** of FIG.1A. The control **314** include suitable logic, circuitry, interfaces and/or code that is configured for monitoring the power of the filtered portion of the downlink frequency comb signal and spectrally aligning the optical filter **312** with the downlink frequency comb signal based on the power of the filtered portion of the downlink frequency comb signal.

The local oscillator **316** includes suitable logic, circuitry, interfaces and/or code that is configured to change the frequency of a signal, such as a reference signal. The local oscillator **316** is used with the integrated coherent receiver **318.**

The integrated coherent receiver **318** corresponds to the single coherent receiver **110** of FIG. 1A. The integrated coherent receiver **318** is configured to receive and detect signals from the end nodes **106A-106N.** The integrated coherent receiver **318** detects information in the form of an optical signal (e.g., through the central node optical link **118**) and converts the optical signal into an electric signal. The integrated coherent receiver **318** may also be referred to as an optical module. Examples of the integrated coherent receiver **318** include, but are not limited to, a receiver, an optical receiver, or a fiber optic receiver, and the like.

The analog to digital converter **320** includes a suitable logic, circuitry, interfaces and/or code that is configured to convert the analog signal into digital form. The digital signal processing **322** includes a suitable logic, circuitry, interfaces and/or code that is configured to measure, filter (or compress) the signal received from the analog to digital converter **320.**

The TEC/control **324** includes a suitable logic, circuitry, interfaces and/or code that is configured to control the wavelength of an optical signal by tuning the temperature of the respective optical device. In an example, the TEC/control **324** may also be referred to as a thermo electrical cooler and current control unit.

The uplink signal **326** is an optical signal. The uplink signal **326** comprises the intensity-modulated optical uplink signals from the end nodes **106A-106N,** and the uplink signal **326** may also be referred to as the combined uplink signal.

In an example, the optical frequency comb generator **302** of the central node **104** generates the downlink frequency comb signal (e.g., with the frequency comb **302A**). Thereafter, the downlink frequency comb signal received from the optical frequency comb generator **302** is passed through the semiconductor optical amplifier **304** to process and amplify the downlink frequency comb signal. Further, the downlink frequency comb signal is passed through the polarization scrambler **306,** for example, to vary a state of polarization of the downlink frequency comb signal. Therefore, the polarization scrambler **306** is used to mitigate polarization-related impairments of the downlink frequency comb signal. Optionally, the downlink frequency comb signal may be modulated by the low-speed data signal **310,** where modulation is performed using the modulator **308** of the central node **104.** By virtue of modulating the downlink frequency comb signal by the low-speed data signal **310,** there will be no need to demultiplex the reference tones of the downlink frequency comb signal. This is because, all the reference tones can be modulated simultaneously by the same low-speed data signal **310,** which is broadcasted to each end node **106A-106N** (i.e., end users).

Therefore, the central node **104** is capable of generating the downlink frequency comb signal with different frequency tones. Thereafter, the optical filter **312** is arranged, such as to receive the downlink frequency comb signal along with the output of the control **314** and the modulator **308.** The optical filter **312** is configured to filter a portion of the downlink frequency comb signal and the uplink signal **326** to suppress the residual optical carriers of the end nodes **106A-106N** in the uplink signal **326.** Moreover, the control **314** monitors the power of the filtered portion of the downlink frequency comb signal, such as to spectrally align the optical filter **312** with the downlink frequency comb signal based on the power of the filtered portion of the downlink frequency comb signal.

In the FIG. 3A there are two implementations shows. A first implementation is described in the first enlarged view **328,** and a second implementation is described in the second enlarged view **330.**

In an implementation, two identical optical filters (e.g., single-stage micro ring filters), such as the first optical filter **122** and the second optical filter **124,** are included by the optical filter **312.** In an example, the first optical filter **122** and the second optical filter **124** are identical in terms of a material, size, propagation loss, temperature and so on so that they have the same filter properties and they behave similarly when the same control parameter (such as temperature variation) is applied to them. Moreover, the second optical filter **124** is used to filter the uplink signal **326** of each end node **106A-106N,** and the first optical filter **122** is used to filter the portion of the downlink frequency comb signal as generated by the optical frequency comb generator **302.** In an example, the TEC/control **324** is configured to tune the first optical filter **122** and the second optical filter **124,** as shown in the first enlarged view **328.** In such a case, the output of the optical frequency comb generator **302** is applied to the first optical filter **122,** while the uplink signal **326** is applied to the second optical filter **124.** Moreover, the output of the first optical filter **122** is further received by the TEC/control **324,** which is configured to tune the optical filter **312** based on the output of the first optical filter **122** and the second optical filter **124.**

In another example, the TEC/control **324** is configured to tune the optical frequency comb generator **302** (or a laser) based on the output of the first optical filter **122,** as shown in the second enlarged view **330.** As an alternative, one of the phase modulator **142,** the electro-optic modulator **144,** the Mach-Zehnder interferometer **136D,** and the intra-cavity etalon **146** can be used to tune the optical frequency comb generator **302** (or a laser). Beneficially, the spectral alignment of the optical frequency comb generator **302** to the optical filter **312** does not affect the uplink communication that already exists because the alignment control and filter process of the uplink signal **326** are separated in different filters (or different direction/paths) of the single filter, such as the optical filter **312.** Further, the tuning algorithm is based on the minimized output power of the first optical filter **122,** and a suitable alignment is achieved at minimum output power with reduced cost.

FIG. 3B is a block diagram of an apparatus for carrier suppression in a frequency referenced passive optical network with point to multi-point topology, in accordance with yet another embodiment of the present disclosure. FIG. 3B is described in conjunction with elements from FIGs. 1A and 3A. With reference to FIG. 3B, there is shown the optical filter **126,** circulators **332A** and **332B,** and isolators **334A** and **334B.** There is shown enlarged views **336, 338, 340** and **342** of the optical filter **312,** and the control **314.**

The circulators **332A** and **332B** are micro-optic devices and can be used with the end node **106A-106N.** The isolators **334A** and **334B** are non-reciprocal devices that allows optical signal (or light) to pass along a fiber in one direction and offer a very high attenuation in an opposite direction.

In an implementation, the optical filter **126** (e.g., a single-stage micro ring filter) is included by the optical filter **312** (or the periodic optical filter unit **112**). In an example, the uplink signal **326** always tracks the output of the optical frequency comb generator **302** (or the downlink frequency comb signal) (e.g., via a frequency lock loop). Thus, the optical filter **126** is used to indirectly tune the uplink signal **326** (or laser frequency) via tuning the optical frequency comb generator **302** (or the downlink frequency comb signal) or tune the optical filter **312.** Alternatively, the optical filter **126** is used to tune either the downlink frequency comb signal or the optical filter **312.** In such a case, the portion of the output of the optical frequency comb generator **302** (or the downlink frequency comb signal) is passed in one direction or path of the optical filter **126,** and the uplink signal **326** is passed in another direction or path of the optical filter **126.** In other words, the portion of the output of the optical frequency comb generator **302** is monitored in one direction or path of the optical filter **126,** and the uplink signal **326** is filtered (or suppressed) in another direction or path of the optical filter **126.** In an implementation, the optical filter **126** is symmetrical regarding filter properties, including the frequency response, so the features of the optical filter **126** are identical in opposite directions (or different paths).

In an example, the optical filter **126** has a single-ring configuration that may include the circulators **332A** and **332B** or the isolators **334A** and **334B.** In the case of the circulators **332A** and **332B,** the uplink signal **326** is applied to the circulator **332A,** and the output of the optical frequency comb generator **302** is applied to the circulator **332B,** as shown by the enlarged view **336.** Moreover, the output of the circulator **332A** is further received by the photodiode **138.** Thereafter, based on the output of the photodiode **138,** the TEC/control **324** is configured to control the optical filter **126.** As a result, the optical filter **126** is configured to tune the optical filter **312.**

In a former case, where isolators **334A** and **334B** are used in the optical filter **126,** the output of the optical frequency comb generator **302** is applied to the isolator **334A,** and the uplink signal **326** is applied to the isolator **334B.** Moreover, the output of the isolator **334A** is further received by the photodiode **138,** as shown by the enlarged view **338.** Thereafter, based on the output of the photodiode **138,** the TEC/control **324** is configured to control the optical filter **126.** As a result, the optical filter **126** is configured to tune the optical filter **312.**

In another example, the optical filter **126** comprises the isolators **334A** and **334B,** wherein the uplink signal **326** is applied to the isolator **334A,** and the output of the optical frequency comb generator **302** is applied to the isolator **334B,** as shown by the enlarged view **340.** Moreover, the output of the isolator **334B** is further received by the photodiode **138.** Thereafter, based on the output of the photodiode **138,** the TEC/control **324** is configured to tune the optical frequency comb generator **302.** As an alternative, one of the phase modulator **142,** the electro-optic modulator **144,** the Mach-Zehnder interferometer **136D,** and the intra-cavity etalon **146** can be used to tune the optical frequency comb generator **302.**

In a yet another case, where the circulators **332A** and **332B** are used in the optical filter **126,** the uplink signal **326** is applied to the circulator **332A,** and the output of the optical frequency comb generator **302** is applied to the circulator **332B,** as shown by the enlarged view **342.** Moreover, the output of the circulator **332A** is further received by the photodiode **138.** Thereafter, based on the output of the photodiode **138,** the TEC/control **324** is configured to tune the optical frequency comb generator **302.** As an alternative, one of the phase modulator **142,** the electro-optic modulator **144,** the Mach-Zehnder interferometer **136D,** and the intra-cavity etalon **146** can be used to tune the optical frequency comb generator **302.** Beneficially, the tuning/control algorithm of the optical filter **126** minimizes the output power of the control direction/path. In addition, based on the monitored power of the optical frequency comb generator **302,** tuning of either the optical filter **126** or the optical frequency comb generator **302** itself can be executed.

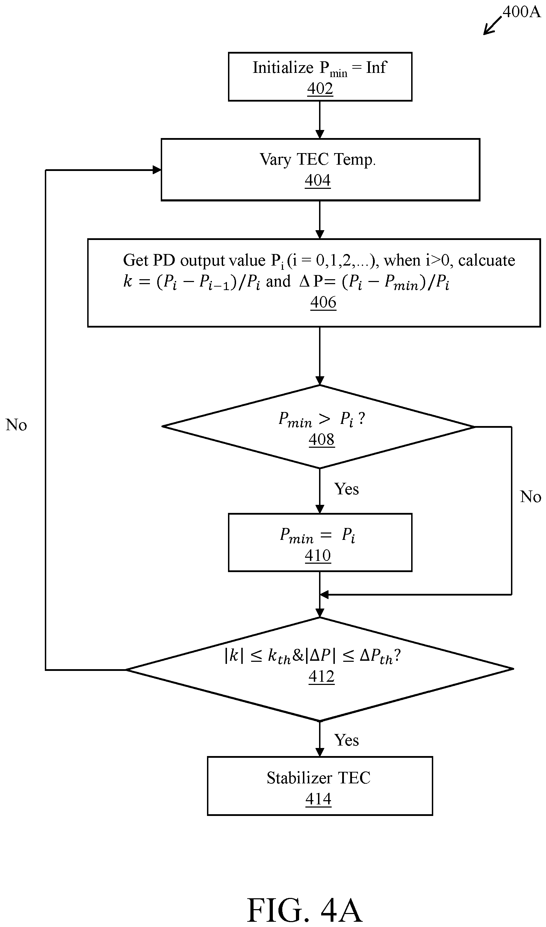

FIG. 4A is a flowchart of a control algorithm to stabilize a thermo-electronic controller, in accordance with an embodiment of the present disclosure. FIG. 4A is described in conjunction with elements from FIGs. 1A. With reference to FIG. 4A, there is shown a flowchart of a control algorithm **400A** to minimum output power of a downlink frequency comb signal. The control algorithm **400A** is executed by the control unit **114** of FIG. 1A. The control algorithm **400A** includes operations **402** to **414.**

At operation **402,** the control algorithm **400A** comprises initializing the photodiode **138** with an initial power (e.g., Pₘᵢₙ = Inf) of the downlink frequency comb signal.

At operation **404,** the control algorithm **400A** comprises, varying temperature of the thermo-electronic controller **140** by the control unit **114.**

At operation **406,** the control algorithm **400A** comprises measuring the output power value (e.g., Pᵢ , where i = 0,1,2,...) of the photodiode **138** by the control unit **114.** In an example, if i>0, then the temperature (e.g., k= (Pᵢ-Pᵢ₋₁)/Pᵢ) of the thermo-electronic controller **140** is calculated using the output power value of the photodiode. At operation **406,** the output power value of the photodiode **138** is further used to calculate an average output value (e.g., ΔP= (Pᵢ-Pₘᵢₙ)/Pᵢ).

At operation **408,** the control algorithm **400A** comprises comparing if the minimum power value (Pₘᵢₙ) of the photodiode **138** is greater than the output power value (Pᵢ) of the photodiode **138.** If the minimum power value (Pₘᵢₙ) is greater than the output power value (Pᵢ), then the control algorithm **400A** moves to operation **410,** otherwise moves directly to operation **412.**

At operation **410,** the control algorithm **400A** comprises setting the minimum power value (Pₘᵢₙ) of the photodiode **138** equal to the output power value (Pᵢ) of the photodiode **138.**

At operation **412,** the control algorithm **400A** comprises comparing if mode value of the temperature (|k|) is less than or equal to a threshold value of temperature (kth). At operation **412,** the control algorithm **400A** further comprises comparing if mode value of the average power (|ΔP|) is less than or equal to a threshold value of the average power (ΔPth). If result of the operation **412** is true, the control algorithm **400A** moves to operation **414,** otherwise move back to the operation **404.**

At operation **414,** the control algorithm **400A** comprises stabilizing the thermo-electronic controller **140** by the control unit **114.** Further, stabilizing the thermo-electronic controller **140** is beneficial to spectrally align the periodic optical filter unit **112** with the downlink frequency comb signal and minimize the power of the filtered portion of the downlink frequency comb signal.

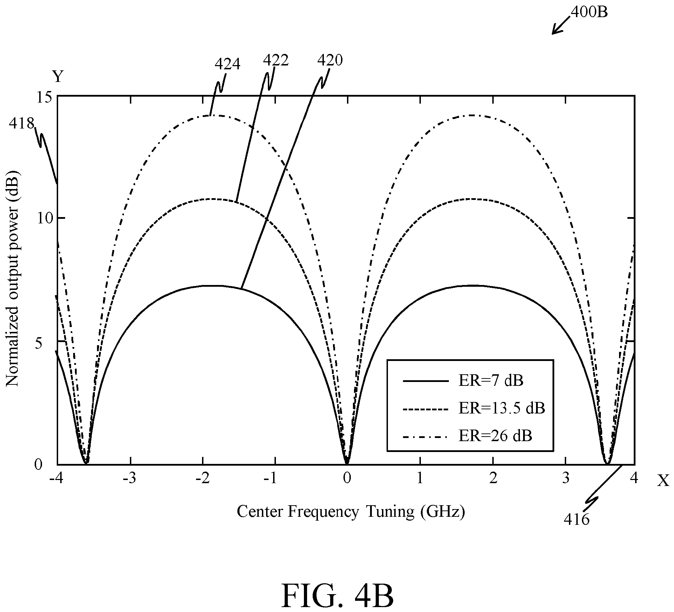

FIG. 4B is a graphical representation that illustrates a relationship between a center frequency tunning of a downlink frequency comb signal and a normalized output power of a periodic optical filter unit, in accordance with an embodiment of the present disclosure. FIG. 4B is described in conjunction with elements from FIGs. 1A, 3A, and 3B. With reference to FIG. 4B, there is shown a graphical representation **400B** that represents the relationship between a center frequency tunning of the downlink frequency comb signal and a normalized output power of the periodic optical filter unit **112.**

The graphical representation **400B** represents center frequency tunning in gigahertz (GHz) of the downlink frequency comb signal on the X-axis **416** and normalized output power in decibel (dB) of the periodic optical filter unit **112** on the Y-axis **418.** In the graphical representation **400B,** lines **420, 422,** and **424** illustrate an extinction ratio (ER) of the periodic optical filter unit **112.** In particular, the line **420** illustrates the extinction ratio (ER) of value 7 decibel, the line **422** illustrates the extinction ratio (ER) of 13.5 decibel, and the line **424** illustrates the extinction ratio (ER) of 26 decibel for periodic optical filter unit **112.**

In an implementation, spectral alignment between the residual optical carriers of the combined uplink signal and transmission minima of the periodic optical filter unit **112** is achieved by tuning the central frequency of the downlink frequency comb signal. In an example, tuning the central frequency of the downlink frequency comb signal is executed periodically to track the drift caused by environmental changes (e.g., temperature). Further, the perfect alignment between the periodic optical filter unit **112** with the downlink frequency comb signal leads to a minimum detected output power of the control unit **114.** In another example, tuning the central frequency of the downlink frequency comb signal causes variation in the normalized output power of the periodic optical filter unit **112** and also on the extinction ratio. As a result, the higher the extinction ratio of the periodic optical filter unit **112,** the more distinguishable the output power at different central frequencies, as shown in FIG. 4B.

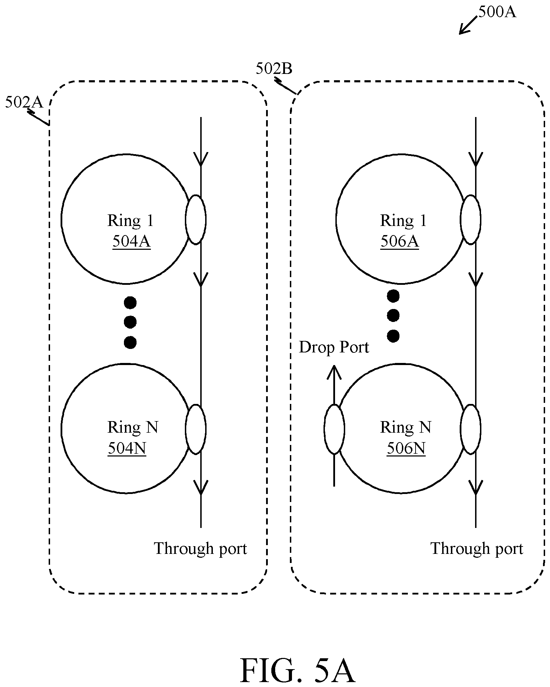

FIG. 5A is an illustration that depicts multi-stage micro ring filters, in accordance with an embodiment of the present disclosure. FIG. 5A is described in conjunction with elements from FIGs. 1A. With reference to FIG. 5A, there is shown an illustration **500A** of multi-stage micro ring filters **502A** and **502B.** The multi-stage micro ring filter **502A** includes rings **504A-504N,** and the multi-stage micro ring filter **502B** includes the rings **506A-506N.**

The multi-stage micro ring filters **502A** and **502B** include suitable logic, circuitry, interfaces and/or code that is configured to perform filtering operation.

In an implementation, the multi-stage micro ring filters **502A** and **502B** may consist of N cascaded rings with through port and/or drop port. In an example, the multi-stage micro ring filter **502A** consists of N number of rings **504A-504N** cascaded with through port, and the multi-stage micro ring filter **502B** consists of N number of rings **506A-506N** cascaded with drop port. In another example, the multi-stage micro ring filter **502A** consists of N number of rings **504A-504N** cascaded with drop port, and the multi-stage micro ring filter **502B** consists of N number of rings **506A-506N** cascaded with through port.

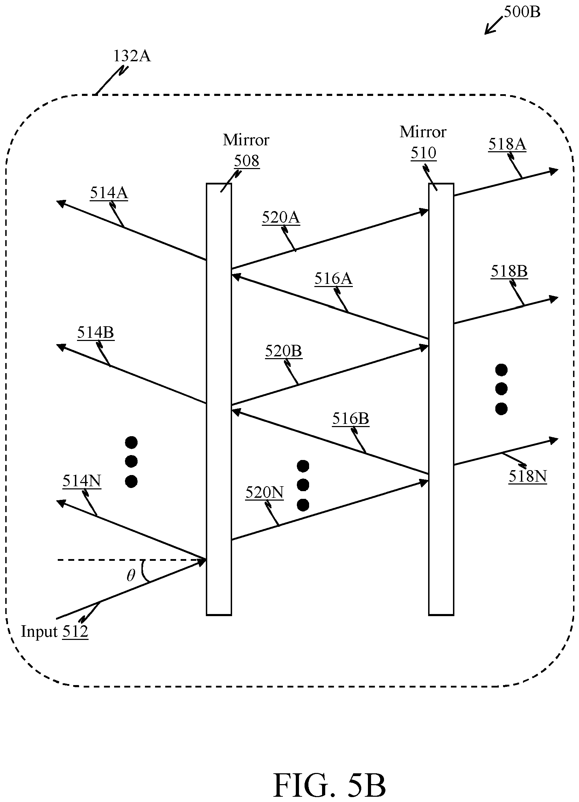

FIG. 5B is an illustration that depicts a Fabry-Perot etalon, in accordance with an embodiment of the present disclosure. FIG. 5B is described in conjunction with elements from FIGs. 1A and 5A. With reference to FIG. 5B, there is shown an illustration **500B** of the Fabry-Perot etalon **132A** that includes mirrors **508** and **510,** an input **512,** reflectance beams **514A-514N, 516A,** and **516B,** and transmittance beams **518A-518N, 520A-520N.**

The mirror **508** and the mirror **510** may also be referred to as lenses that are configured to receive the input **512** (e.g., light) and produce the reflectance beams **514A-514N, 516A,** and **516B,** and the transmittance beams **518A-518N, 520A-520N.** In an example, the reflectance beams **514A-514N, 516A,** and **516B** corresponds to the reflected rays of the input **512,** and the transmittance beams **518A-518N, 520A-520N** corresponds to the transmitted rays of the input **512.** In another example, functionally, the multi-stage micro ring filters **502A** and **502B** of the through port and drop port correspond to the reflectance beams **514A-514N, 516A,** and **516B,** and transmittance beams **518A-518N, 520A-520N** of the Fabry-Perot etalon **132A,** respectively.

## Claims

1. An apparatus (102) for carrier suppression in a frequency referenced passive optical network, PON, with point to multi-point, P2MP, topology comprising a central node (104) and end nodes (106A-106N), where each end node (106A-106N) is configured to generate an intensity-modulated optical uplink signal and to lock a central frequency of the intensity-modulated optical uplink signal to one of reference tones of a downlink frequency comb signal broadcasted by a central node transmitter (108), and the central node (104) comprises a single coherent receiver (110) for detecting a combined uplink signal, the combined uplink signal comprising the intensity-modulated optical uplink signals from the end nodes (106A-106N), the apparatus (102) configured to be
arranged in the central node (104) and comprising:
a periodic optical filter unit (112) configured for suppressing residual optical carriers in the combined uplink signal by filtering a portion of the downlink frequency comb signal and the combined uplink signal, and
a control unit (114) configured for monitoring a power of the filtered portion of the downlink frequency comb signal and spectrally aligning the periodic optical filter unit (112) with the downlink frequency comb signal based on the power of the filtered portion of the downlink frequency comb signal.

2. The apparatus (102) of claim 1, wherein the periodic optical filter unit (112) has a free spectral range close to a channel spacing of the frequency referenced passive optical network, PON.

3. The apparatus (102) of claim 1 or 2, wherein the periodic optical filter unit (112) comprises a first optical filter (122) and a second optical filter (124), identical to the first optical filter (122), with the portion of the downlink frequency comb signal passing through the first optical filter (122) and the combined uplink signal passing through the second optical filter (124).

4. The apparatus (102) of claim 3, wherein each of the first optical filter (122) and the second optical filter (124) comprises one of a microring resonator (130A and 130B), a Fabry-Perot etalon (132A and 132B), a multi-cavity etalon (134A and 134B), and a Mach-Zehnder interferometer (136A and 136B).

5. The apparatus (102) of claim 1 or 2, wherein the periodic optical filter unit (112) comprises a optical filter (126) with multiple optical ports (128A-128N) wherein the portion of the downlink frequency comb signal passes in one direction or path of the optical filter (126) and the combined uplink signal passes in another direction or path of the optical filter (126).

6. The apparatus (102) of claim 5, wherein the optical filter (126) comprises one of a microring resonator (130C), a Fabry-Perot etalon (132C), a multi-cavity etalon (134C), and a Mach-Zehnder interferometer (136C).

7. The apparatus (102) of any of claims 1 to 6, wherein the control unit (114) comprises a photodiode, PD, (138) and is configured for spectrally aligning the periodic optical filter unit (112) with the downlink frequency comb signal to minimize the power of the filtered portion of the downlink frequency comb signal.

8. The apparatus (102) of any of claims 1 to 6, wherein the control unit (114) further comprises a thermo-electronic controller, TEC (140), a phase modulator (142), an electro-optic modulator (144), a Mach-Zehnder interferometer (136D), an intra-cavity etalon (146).

9. The apparatus (102) of claim 7, wherein the control unit (114) is configured for spectrally aligning the periodic optical filter unit (112) with the frequency comb signal by means of tuning a central frequency of the downlink frequency comb signal.

10. The apparatus (102) of claim 7, wherein the control unit (114) is configured for spectrally aligning the periodic optical filter unit with the downlink frequency comb signal by means of tuning a spacing of the downlink frequency comb signal.

11. The apparatus (102) of claim 7, wherein the control unit (114) is configured for spectrally aligning the periodic optical filter unit (112) with the downlink frequency comb signal by means of tuning a central frequency of the periodic optical filter unit (112).

12. A method (200) of carrier suppression in a frequency referenced passive optical network, PON, with point to multi-point, P2MP, topology comprising a central node (104) and end nodes (106A-106N), where each end node (106A-106N) is configured to generate an intensity-modulated optical uplink signal and lock a central frequency of the intensity-modulated optical uplink signal to one of reference tones of a downlink frequency comb signal broadcasted by a central node transmitter (108), and the central node (104) comprises a single coherent receiver (110) for detecting a combined uplink signal, the combined uplink signal comprising the intensity-modulated optical signals from the end nodes (106A-106N), the method (200) comprising:
separating a portion of the downlink frequency comb signal,
suppressing residual optical carriers in the combined uplink signal by periodic optical filtering the portion of the downlink frequency comb signal and the combined uplink signal,
monitoring a power of the filtered portion of the downlink frequency comb signal, and
spectrally aligning the periodic optical filtering with the downlink frequency comb signal based on the power of the filtered portion of the downlink frequency comb signal.

13. The method (200) of claim 12, wherein the periodic optical filtering has a free spectral range close to a channel spacing of the frequency referenced passive optical network, PON.

14. The method (200) of claim 12 or 13, wherein the periodic optical filtering comprises:
passing the portion of the downlink frequency comb signal through a first optical filter (122), and
passing the combined uplink signal through a second optical filter (124), identical to the first optical filter (122).

15. The method (200) of claim 14, wherein each of the first optical filter (122) and the second optical filter (124) comprises one of a microring resonator (130A and 130B), a Fabry-Perot etalon (132A and 132B), a multi-cavity etalon (134A and 134B), and a Mach-Zehnder interferometer (136A and 136B).

## Patentansprüche

1. Vorrichtung (102) zur Trägerunterdrückung in einem frequenzreferenzierten passiven optischen Netzwerk (PON) mit Punkt-zu-Mehrpunkt-Topologie (P2MP), die einen zentralen Knoten (104) und Endknoten (106A-106N) umfasst, wobei jeder Endknoten (106A-106N) dazu konfiguriert ist, ein intensitätsmoduliertes optisches Uplink-Signal zu erzeugen und eine Mittenfrequenz des intensitätsmodulierten optischen Uplink-Signals mit einem der Referenztöne eines Downlink-Frequenzkammsignals zu koppeln, das von einem zentralen Knotensender (108) ausgestrahlt wird, und der zentrale Knoten (104) einen einzelnen kohärenten Empfänger (110) zum Erfassen eines kombinierten Uplink-Signals umfasst, wobei das kombinierte Uplink-Signal die intensitätsmodulierten optischen Uplink-Signale von den Endknoten (106A-106N) umfasst, wobei die Vorrichtung (102) dazu konfiguriert ist, im zentralen Knoten (104) angeordnet zu werden, und umfassend:
eine periodische optische Filtereinheit (112), die dazu konfiguriert ist, verbleibende optische Träger in dem kombinierten Uplink-Signal zu unterdrücken, indem ein Abschnitt des Downlink-Frequenzkammsignals und des kombinierten Uplink-Signals gefiltert wird, und
eine Steuereinheit (114), die dazu konfiguriert ist, eine Leistung des gefilterten Abschnitts des Downlink-Frequenzkammsignals zu überwachen und die periodische optische Filtereinheit (112) spektral mit dem Downlink-Frequenzkammsignal basierend auf der Leistung des gefilterten Abschnitts des Downlink-Frequenzkammsignals auszurichten.

2. Vorrichtung (102) nach Anspruch 1, wobei die periodische optische Filtereinheit (112) einen freien Spektralbereich nahe einem Kanalabstand des frequenzreferenzierten passiven optischen Netzwerks (PON) aufweist.

3. Vorrichtung (102) nach Anspruch 1 oder 2, wobei die periodische optische Filtereinheit (112) einen ersten optischen Filter (122) und einen zweiten optischen Filter (124) umfasst, der identisch mit dem ersten optischen Filter (122) ist, wobei der Abschnitt des Downlink-Frequenzkammsignals durch den ersten optischen Filter (122) und das kombinierte Uplink-Signal durch den zweiten optische Filter (124) läuft.

4. Vorrichtung (102) nach Anspruch 3, wobei jeder von dem ersten optischen Filter (122) und dem zweiten optischen Filter (124) einen Mikroresonator (130A und 130B), ein Fabry-Perot-Etalon (132A und 132B), ein Mehrkammer-Etalon (134A und 134B) und ein Mach-Zehnder-Interferometer (136A und 136B) umfasst.

5. Vorrichtung (102) nach Anspruch 1 oder 2, wobei die periodische optische Filtereinheit (112) einen optischen Filter (126) mit mehreren optischen Anschlüssen (128A-128N) umfasst, wobei der Abschnitt des Downlink-Frequenzkammsignals in einer Richtung oder einem Pfad des optischen Filters (126) verläuft und das kombinierte Uplink-Signal in einer anderen Richtung oder einem anderen Pfad des optischen Filters (126) verläuft.

6. Vorrichtung (102) nach Anspruch 5, wobei der optische Filter (126) einen Mikroresonator (130C), ein Fabry-Perot-Etalon (132C), ein Mehrkammer-Etalon (134C) oder ein Mach-Zehnder-Interferometer (136C) umfasst.

7. Vorrichtung (102) nach einem der Ansprüche 1 bis 6, wobei die Steuereinheit (114) eine Fotodiode (PD) (138) umfasst und dazu konfiguriert ist, die periodische optische Filtereinheit (112) spektral mit dem Downlink-Frequenzkammsignal auszurichten, um die Leistung des gefilterten Abschnitts des Downlink-Frequenzkammsignals zu minimieren.

8. Vorrichtung (102) nach einem der Ansprüche 1 bis 6, wobei die Steuereinheit (114) ferner einen thermoelektronischen Controller (TEC) (140), einen Phasenmodulator (142), einen elektrooptischen Modulator (144), ein Mach-Zehnder-Interferometer (136D), ein Intrakammer-Etalon (146) umfasst.

9. Vorrichtung (102) nach Anspruch 7, wobei die Steuereinheit (114) zum spektralen Ausrichten der periodischen optischen Filtereinheit (112) auf das Frequenzkammsignal durch Abstimmen einer Mittenfrequenz des Downlink-Frequenzkammsignals konfiguriert ist.

10. Vorrichtung (102) nach Anspruch 7, wobei die Steuereinheit (114) zum spektralen Ausrichten der periodischen optischen Filtereinheit auf das Downlink-Frequenzkammsignal durch Abstimmen eines Abstands des Downlink-Frequenzkammsignals konfiguriert ist.

11. Vorrichtung (102) nach Anspruch 7, wobei die Steuereinheit (114) zum spektralen Ausrichten der periodischen optischen Filtereinheit (112) auf das Downlink-Frequenzkammsignal durch Abstimmen einer Mittenfrequenz der periodischen optischen Filtereinheit (112) konfiguriert ist.

12. Verfahren (200) der Trägerunterdrückung in einem frequenzreferenzierten passiven optischen Netzwerk (PON) mit Punkt-zu-Mehrpunkt-Topologie (P2MP), die einen zentralen Knoten (104) und Endknoten (106A-106N) umfasst, wobei jeder Endknoten (106A-106N) dazu konfiguriert ist, ein intensitätsmoduliertes optisches Uplink-Signal zu erzeugen und eine Mittenfrequenz des intensitätsmodulierten optischen Uplink-Signals mit einem der Referenztöne eines Downlink-Frequenzkammsignals zu koppeln, das von einem zentralen Knotensender (108) ausgestrahlt wird, und der zentrale Knoten (104) einen einzelnen kohärenten Empfänger (110) zum Erfassen eines kombinierten Uplink-Signals umfasst, wobei das kombinierte Uplink-Signal die intensitätsmodulierten optischen Signale von den Endknoten (106A-106N) umfasst, wobei das Verfahren (200) Folgendes umfasst:
Trennen eines Abschnitts des Downlink-Frequenzkammsignals,
Unterdrücken von restlichen optischen Trägern im kombinierten Uplink-Signal durch periodisches optisches Filtern des Abschnitts des Downlink-Frequenzkammsignals und des kombinierten Uplink-Signals,
Überwachen einer Leistung des gefilterten Abschnitts des Downlink-Frequenzkammsignals, und
spektrales Ausrichten der periodischen optischen Filterung auf das Downlink-Frequenzkammsignal auf Grundlage der Leistung des gefilterten Abschnitts des Downlink-Frequenzkammsignals.

13. Verfahren (200) nach Anspruch 12, wobei die periodische optische Filterung einen freien Spektralbereich nahe einem Kanalabstand des frequenzreferenzierten passiven optischen Netzwerks (PON) aufweist.

14. Verfahren (200) nach Anspruch 12 oder 13, wobei das periodische optische Filtern Folgendes umfasst:
Leiten des Abschnitts des Downlink-Frequenzkammsignals durch einen ersten optischen Filter (122), und
Leiten des kombinierten Uplink-Signals durch einen zweiten optischen Filter (124), identisch mit dem ersten optischen Filter (122).

15. Verfahren (200) nach Anspruch 14, wobei jeder des ersten optischen Filters (122) und des zweiten optischen Filters (124) einen Mikroresonator (130A und 130B), ein Fabry-Perot-Etalon (132A und 132B), ein Mehrkammer-Etalon (134A und 134B) und ein Mach-Zehnder-Interferometer (136A und 136B) umfasst.

## Revendications

1. Appareil (102) de suppression de porteuse dans un réseau optique passif, PON, référencé en fréquence à topologie point à multipoint, P2MP, comprenant un nœud central (104) et des nœuds d'extrémité (106A-106N), où chaque nœud d'extrémité (106A-106N) est configuré pour générer un signal de liaison montante optique modulé en intensité et pour verrouiller une fréquence centrale du signal de liaison montante optique modulé en intensité sur l'une de tonalités de référence d'un signal peigne de fréquence de liaison descendante diffusé par un émetteur de nœud central (108), et le nœud central (104) comprend un récepteur cohérent unique (110) pour détecter un signal de liaison montante combiné, le signal de liaison montante combiné comprenant les signaux optiques de liaison montante modulés en intensité issus des nœuds d'extrémité (106A-106N), l'appareil (102) étant configuré pour être agencé dans le nœud central (104) et comprenant :
une unité de filtrage optique périodique (112) configurée pour supprimer des porteuses optiques résiduelles dans le signal de liaison montante combiné par filtrage d'une partie du signal peigne de fréquence de liaison descendante et du signal de liaison montante combiné, et
une unité de commande (114) configurée pour surveiller une puissance de la partie filtrée du signal peigne de fréquence de liaison descendante et pour aligner spectralement l'unité de filtrage optique périodique (112) avec le signal peigne de fréquence de liaison descendante sur la base de la puissance de la partie filtrée du signal peigne de fréquence de liaison descendante.

2. Appareil (102) selon la revendication 1, dans lequel l'unité de filtrage optique périodique (112) présente une plage spectrale libre proche d'un espacement de canal du réseau optique passif, PON, référencé en fréquence.

3. Appareil (102) selon la revendication 1 ou 2, dans lequel l'unité de filtrage optique périodique (112) comprend un premier filtre optique (122) et un second filtre optique (124), identique au premier filtre optique (122), la partie du signal peigne de fréquence de liaison descendante traversant le premier filtre optique (122) et le signal de liaison montante combiné traversant le second filtre optique (124).

4. Appareil (102) selon la revendication 3, dans lequel le premier filtre optique (122) et le second filtre optique (124) comprennent chacun l'un d'un résonateur en micro-anneau (130A et 130B), d'un étalon Fabry-Pérot (132A et 132B), d'un étalon multi-cavités (134A et 134B), et d'un interféromètre de Mach-Zehnder (136A et 136B).

5. Appareil (102) selon la revendication 1 ou 2, dans lequel l'unité de filtrage optique périodique (112) comprend un filtre optique (126) à multiples ports optiques (128A-128N) dans lequel la partie du signal peigne de fréquence de liaison descendante passe dans une direction ou trajet du filtre optique (126) et le signal de liaison montante combiné passe dans une autre direction ou trajet du filtre optique (126).

6. Appareil (102) selon la revendication 5, dans lequel le filtre optique (126) comprend l'un d'un résonateur en micro-anneau (130C), d'un étalon Fabry-Pérot (132C), d'un étalon multi-cavités (134C) et d'un interféromètre de Mach-Zehnder (136C).

7. Appareil (102) selon l'une quelconque des revendications 1 à 6, dans lequel l'unité de commande (114) comprend une photodiode, PD, (138) et est configurée pour aligner spectralement l'unité de filtrage optique périodique (112) avec le signal peigne de fréquence de liaison descendante pour minimiser la puissance de la partie filtrée du signal peigne de fréquence de liaison descendante.

8. Appareil (102) selon l'une quelconque des revendications 1 à 6, dans lequel l'unité de commande (114) comprend également un dispositif de commande thermoélectronique, TEC (140), un modulateur de phase (142), un modulateur électro-optique (144), un interféromètre de Mach-Zehnder (136D), un étalon intracavitaire (146).

9. Appareil (102) selon la revendication 7, dans lequel l'unité de commande (114) est configurée pour aligner spectralement l'unité de filtrage optique périodique (112) avec le signal peigne de fréquence au moyen d'un accord d'une fréquence centrale du signal peigne de fréquence de liaison descendante.

10. Appareil (102) selon la revendication 7, dans lequel l'unité de commande (114) est configurée pour aligner spectralement l'unité de filtrage optique périodique avec le signal peigne de fréquence de liaison descendante au moyen d'un accord d'un espacement du signal peigne de fréquence de liaison descendante.

11. Appareil (102) selon la revendication 7, dans lequel l'unité de commande (114) est configurée pour aligner spectralement l'unité de filtrage optique périodique (112) avec le signal peigne de fréquence de liaison descendante au moyen d'un accord d'une fréquence centrale de l'unité de filtrage optique périodique (112).

12. Procédé (200) de suppression de porteuse dans un réseau optique passif, PON, référencé en fréquence à topologie point à multipoint, P2MP, comprenant un nœud central (104) et des nœuds d'extrémité (106A-106N), où chaque nœud d'extrémité (106A-106N) est configuré pour générer un signal de liaison montante optique modulé en intensité et pour verrouiller une fréquence centrale du signal de liaison montante optique modulé en intensité sur l'une de tonalités de référence d'un signal peigne de fréquence de liaison descendante diffusé par un émetteur de nœud central (108), et le nœud central (104) comprend un récepteur cohérent unique (110) pour détecter un signal de liaison montante combiné, le signal de liaison montante combiné comprenant les signaux optiques modulés en intensité issus des nœuds d'extrémité (106A-106N), le procédé (200) comprenant :
la séparation d'une partie du signal peigne de fréquence de liaison descendante,
la suppression de porteuses optiques résiduelles dans le signal de liaison montante combiné par filtrage optique périodique de la partie du signal peigne de fréquence de liaison descendante et du signal de liaison montante combiné,
la surveillance d'une puissance de la partie filtrée du signal peigne de fréquence de liaison descendante, et
l'alignement spectral du filtrage optique périodique avec le signal peigne de fréquence de liaison descendante sur la base de la puissance de la partie filtrée du signal peigne de fréquence de liaison descendante.

13. Procédé (200) selon la revendication 12, dans lequel le filtrage optique périodique présente une plage spectrale libre proche d'un espacement de canal du réseau optique passif, PON, référencé en fréquence.

14. Procédé (200) selon la revendication 12 ou 13, dans lequel le filtrage optique périodique comprend :
le passage de la partie du signal peigne de fréquence de liaison descendante à travers un premier filtre optique (122), et
le passage du signal de liaison montante combiné à travers un second filtre optique (124), identique au premier filtre optique (122).

15. Procédé (200) selon la revendication 14, dans lequel le premier filtre optique (122) et le second filtre optique (124) comprennent chacun l'un d'un résonateur en micro-anneau (130A et 130B), d'un étalon Fabry-Pérot (132A et 132B), d'un étalon multi-cavités (134A et 134B), et d'un interféromètre de Mach-Zehnder (136A et 136B).
